# EUROPÄISCHE PATENTSCHRIFT

(11) **EP 2 911 755 B1**
(45) Veröffentlichungstag und Bekanntmachung des Hinweises auf die Patenterteilung: **04.01.2017**
(21) Anmeldenummer: 14714749.0
(22) Anmeldetag: 03.04.2014
(51) Int. Cl.: G06F 3/01, A61H 3/00, A63B 69/00, A63B 71/06, A61H 1/00, A63B 5/00, A63B 22/20, A63B 23/04, A63B 71/00, A63F 13/214, A63B 21/00, A63B 24/00, F41G 3/26, G09B 5/00, A63F 13/245, A63F 13/42

(54) **VORRICHTUNG ZUM AUFNEHMEN EINER PERSON UND ZUR TEILWEISEN EINSCHRÄNKUNG IHRER BEWEGUNGSFREIHEIT**
APPARATUS FOR ACCOMMODATING A PERSON AND PARTIALLY RESTRICTING THEIR FREEDOM OF MOVEMENT
APPAREIL POUR ACCUEILLIR UNE PERSONNE ET POUR PARTIELLEMENT LIMITER SA LIBERTÉ DE MOUVEMENT

(30) Priorität: 10.04.2013 AT 2722013
(43) Veröffentlichungstag der Anmeldung: 02.09.2015
(73) Patentinhaber: Cakmak, Tuncay, 3130 Herzogenburg (AT)
(72) Erfinder: Cakmak, Tuncay, 3130 Herzogenburg (AT)
(74) Vertreter: KLIMENT & HENHAPEL
(86) Internationale Anmeldenummer: PCT/EP2014/056728
(87) Internationale Veröffentlichungsnummer: WO 2014/166814

(56) Entgegenhaltungen:
- WO-A2-99/35559
- WO-A2-02/059853
- WO-A2-2007/064456
- US-A1- 2009 111 670
- Benjamin Gründken: "Virtuix Omni macht Beine zum Controller - Massentauglicher Virtual-Reality-Device dank Kickstarter?", , 2. März 2013 (2013-03-02), XP055126983, Gefunden im Internet: URL:http://www.pcgameshardware.de/Kickstar ter-Event-239378/News/Virtuix-Omni-Beine-o ntroller-Virtual-Reality-Device-Kickstarte r-1058541/ [gefunden am 2014-07-04]
- "Cyberith - Virtualizer GETS TESTED at the GAMESCOM 2013 Hall 10.1", , 23. August 2013 (2013-08-23), XP054975441, Gefunden im Internet: URL:https://www.youtube.com/watch?v=0E6O_O UW8Xg [gefunden am 2014-07-03]

## Beschreibung

### GEBIET DER ERFINDUNG

Die Erfindung bezieht sich auf eine Vorrichtung zum Aufnehmen zumindest einer Person und zur teilweisen Einschränkung der Bewegungsfreiheit der in der Vorrichtung aufgenommenen Person, mit einer Plattform und einem oberhalb der Plattform angeordneten ersten ringförmigen Teil zum Umschließen der zumindest einen Person, wobei der ringförmige Teil indirekt mit der Plattform verbunden und relativ zur Plattform drehbar ist, wobei der erste ringförmige Teil (13) in Bezug zur Plattform (7a) auf- und ab bewegbar ist, wobei weiters die Vorrichtung (100) einen zweiten ringförmigen Teil (12) aufweist, wobei die durch den ersten ringförmigen Teil (13) aufgespannte Ebene und die durch den zweiten ringförmigen Teil (12) aufgespannte Ebene im Wesentlichen parallel zueinander stehen und der erste ringförmige Teil (13) innerhalb des zweiten ringförmigen Teils (12) angeordnet und an diesem um eine Drehachse (13a), die im Wesentlichen normal zu der vom ersten ringförmigen Teil (13) aufgespannten Ebene steht, drehbar gelagert ist, wobei weiterhin an dem zweiten ringförmigen Teil (12) an mindestens einem Punkt ein Gestänge (4) befestigt ist, das schräg zu der vom zweiten ringförmigen Teil (12) aufgespannten Ebene nach unten verläuft. Die Erfindung bezieht sich insbesondere auf Locomotion-Vorrichtungen, Bewegungsvorrichtungen, (Reality) Simulationsvorrichtung, Trainings- und/oder Sportvorrichtungen.

### STAND DER TECHNIK

Solche Vorrichtungen sind auch bekannt unter dem Namen "locomotion devices" und finden vor allem in Verbindung mit einem "head mounted display" Anwendung als Simulationsgerät, Sportgerät und Vergnügungsgerät. Man kann eine solche Vorrichtung auch für virtuelles "sight seeing" verwenden, wenn man die entsprechende virtuelle Umgebung dafür zur Verfügung hat. Wenn man zusätzlich eine Art Controller in der Hand hat kann man "shooter games" damit spielen, ohne auf eine Maus oder eine Tastatur angewiesen zu sein. Durch geeignete Software kann man es sogar realisieren, die Blickrichtung, die Schussrichtung und die Bewegungsrichtung zu entkoppeln und somit das "gaming" noch realer werden zu lassen.

Die WO2002059853A2 offenbart ein Reality Simulations System mit einem Bewegungskäfig und einem den Benutzer umgebenden Bewegungsring, der bezüglich des Bewegungskäfigs einen rotatorischen Freiheitsgrad aufweist. Der Benutzer ist über verhältnismäßig lange, nachgiebige Fixierfedern, die an einem vom Benutzer zu tragenden Gürtel befestigt sind, am Bewegungsring angekoppelt. Eine derartige Konstruktion erfordert aufgrund des großen Durchmessers und der langen Fixierfedern viel Raum, der insbesondere im privaten Bereich nicht zur Verfügung steht. Darüber hinaus sind die Fixierfedern teuer und verschleißanfällig. Eine Einschränkung der Bewegungsfreiheit ist nicht in dem Ausmaß gegeben, in der dies für viele Anwendungen gewünscht ist, geben doch die Fixierfedern in alle Richtungen viel Spielraum.

In der DE10361417B3 wird eine Vorrichtung beschrieben, welche aus einer Hohlkugel besteht, die auf Rollen gelagert ist und in der man sich dann bewegen kann, indem man diese Hohlkugel zum Rotieren bringt. Die Rotation der Kugel wird über Sensoren erfasst und zu einem Computer weitergeleitet. Dieser Computer berechnet nun die Rotationswerte und setzt die Bewegung des Benutzers in die Bewegung einer virtuellen Figur um. Somit kann man sich durch virtuelle Räume bewegen. Diese Hohlkugel muss einen Durchmesser besitzen, welcher größer ist als die Körpergröße der Person, welche das Gerät verwenden möchte. Aus diesem Grund braucht man viel Platz, um diese Vorrichtung benutzen zu können. Da die Hohlkugel auch Trägheit besitzt, ist das abrupte Stehenbleiben in dem Gerät nur bedingt möglich.

Aus der US7470218 ist eine Vorrichtung bekannt, welche aus einer gewölbten Bodenplattform besteht, auf der man mit speziellen Schuhen Gleitbewegungen ausführt. Diese Gleitbewegungen ähneln nicht den natürlichen Geh-Bewegungen und die Bewegung der Vorwärts-Bewegung ist gleich der Rückwärts-Bewegung, somit erkennt das Gerät nicht, in welche Richtung man sich bewegen will.

Weitere von der vorliegenden Erfindung weiter abliegende Konstruktionen sind folgenden Druckschriften zu entnehmen: US 6135928 A, US5372561A, GB2312273A, US5702307A, DE10361417B3 und CN201871178U.

Aus der WO 99/35559 A2 ist eine Konstruktion mit einem inneren ringförmigen Teil bekannt, welcher an einem äußeren ringförmigen Teil drehbar gelagert ist, wobei der Benutzer bei der Verwendung der Konstruktion sich innerhalb des inneren ringförmigen Teils befindet. Mittels Heber ist eine Änderung der vertikalen Position der ringförmigen Teile möglich.

### AUFGABE DER ERFINDUNG

Der Erfindung liegt demnach die Aufgabe zugrunde, eine Vorrichtung bereitzustellen, die die Nachteile von bekannten Simulations- bzw. Bewegungsvorrichtungen nicht aufweist und der sich in der Vorrichtung bewegenden Person trotz teilweiser Einschränkung der Bewegungsfreiheit möglichst viel Bewegungsspielraum erlaubt. Eine derartige Vorrichtung soll durch platzsparendes Design und einfache Konstruktion verwirklichbar sein. Eine zuverlässige und definierte Anbindung der Person an die Vorrichtung soll gewährleistet sein, während gleichzeitig das Verletzungsrisiko minimiert werden soll.

### DARSTELLUNG DER ERFINDUNG

Diese Aufgabe wird mit einer Vorrichtung der eingangs genannten Art dadurch gelöst, dass der ringförmige Teil in Bezug zur Plattform auf und ab bewegbar ist.

Zusätzlich zum Drehfreiheitsgrad erhält der ringförmige Teil einen translatorischen Freiheitsgrad, wodurch die Anwendungsmöglichkeiten aufgrund gesteigerter Bewegungsfreiheit insbesondere in vertikaler Richtung erweitert werden und gleichzeitig eine platzsparende Konstruktion ermöglicht wird. Der erste ringförmige Teil dreht sich mit der Person mit, d.h. die Drehbewegungen der Person werden auf den ringförmigen Teil übertragen. Der erste ringförmige Teil ist formbeständig, insbesondere aus starrem Material, z.B. einem Metall oder Hartkunststoff, gebildet, wodurch die nötige Stabilität erreicht wird. Bevorzugt ist der ringförmige Teil ein durchgehender Ring. Es wäre jedoch auch ein an einer Stelle unterbrochener Ring denkbar, z.B. eine ringförmige Spange. Der erste ringförmige Teil ist dazu ausgebildet, den Rumpf einer Person zu umschließen, und dient daher der Ankopplung der Person an die Vorrichtung.

Der erste ringförmige Teil ist indirekt mit der Plattform verbunden bzw. an diese angebunden und relativ zu dieser auf und ab bewegbar, sodass auch die vertikalen Bewegungen der Person, insbesondere beim Aufrichten und Springen, auf den ringförmigen Teil übertragen werden können.

Bevorzugt weist die Vorrichtung einen zweiten ringförmigen Teil auf, wobei die durch den ersten ringförmigen Teil aufgespannte Ebene und die durch den zweiten ringförmigen Teil aufgespannte Ebene im Wesentlichen parallel zueinander stehen und der erste ringförmige Teil innerhalb des zweiten ringförmigen Teils angeordnet und an diesem um eine Drehachse, die im Wesentlichen normal zu der vom ersten ringförmigen Teil aufgespannten Ebene steht, drehbar gelagert ist. In dieser Ausführungsform ist der erste (innere) ringförmige Teil im zweiten (äußeren) ringförmigen Teil drehbar gelagert. Dadurch wird der rotatorische Freiheitsgrad des ersten ringförmigen Teils relativ zur Plattform auf zuverlässige, einfache und platzsparende Weise erreicht. Dies bedeutet, dass der zweite (äußere) Ringteil den ersten (inneren) Ringteil umgibt und dabei als Lagerung bzw. unmittelbare Halterung für den ersten (inneren) Ringteil dient. Auch der zweite (äußere) ringförmige Teil ist formbeständig, insbesondere aus starrem Material, z.B. einem Metall oder Hartkunststoff, gebildet, wodurch die nötige Stabilität erreicht wird. Bevorzugt wird der erste (innere) ringförmige Teil durch den zweiten (äußeren) ringförmigen Teil axial gehalten, sodass eine gegenseitige Verschiebung der beiden ringförmigen Teile in Richtung parallel zur Drehachse blockiert ist. Die beiden ringförmigen Teile sind dabei relativ zur Plattform zusammen auf und ab bewegbar.

Bevorzugt ist der zweite ringförmige Teil relativ zur Plattform drehfest, wodurch sich klar definierte Freiheitsgrade für den ersten ringförmigen Teil relativ zur Plattform ergeben. Bevorzugt sind diese Freiheitsgrade eine Drehung um eine Drehachse und eine translatorische Bewegung im Wesentlichen parallel zur Drehachse, wobei alle anderen Freiheitsgrade blockiert sind.

Bevorzugt ist der ringförmige Teil relativ zur Plattform um eine Drehachse drehbar, die im Wesentlichen normal zu der vom ringförmigen Teil aufgespannten Ebene steht, wodurch Drehungen der Person um ihre Körperachse ermöglicht werden, wenn der Ring bzw. der erste ringförmige Teil den Rumpf der Person umschließt.

Bevorzugt steht die vom ringförmigen Teil aufgespannte Ebene im Wesentlichen parallel zur Fläche der Plattform oder beträgt der Winkel oder eine mögliche Winkeländerung zwischen diesen Ebenen höchstens 45°, bevorzugt höchstens 30°, besonders bevorzugt höchstens 15°. Die Vorrichtung kann daher im Stehen benutzt werden, was beim sportlichen Training und bei den meisten körperbetonten Realityspielen erwünscht ist. Auch ist das Training auf einer in Bezug zur Ringebene schiefen Ebene möglich.

Bevorzugt ist der ringförmige Teil in Bezug zur Plattform im Wesentlichen in vertikaler Richtung auf- und ab bewegbar, wobei vorzugsweise der ringförmige Teil über eine im Wesentlichen vertikale Führung mit der Plattform verbunden ist. Durch diesen Freiheitsgrad wird insbesondere das Springen und Ducken ermöglicht. Eine kompakte Konstruktion ist gewährleistet.

Bevorzugt ist der erste ringförmige Teil relativ zur Plattform in Bezug auf eine translatorische Bewegung in der Horizontalen fixiert, wodurch eine räumliche Fortbewegung der Person in horizontaler Richtung verhindert wird. Diese Ausführungsform eignet sich vor allem bei geringem zur Verfügung stehendem Platzbedarf.

Bevorzugt weist der erste ringförmige Teil zumindest eine Anhängevorrichtung zur Anbindung der Person an den ersten ringförmigen Teil auf. Diese kann zum Beispiel in Form eines Hakens ausgebildet sein oder durch ein Loch am Ring selber. An der Anhängevorrichtung kann sich die Person mittels eines Gurtes, Seiles, Bandes, einer Kette od. dgl. festmachen.

Bevorzugt weist die Vorrichtung einen Hüftgurt zur Anbindung der Person an den ersten ringförmigen Teil auf, wobei vorzugsweise der Hüftgurt mindestens einen längenverstellbaren Verbindungsgurt umfasst, welcher mit dem ersten ringförmigen Teil verbunden wird, sodass der Verbindungsgurt die durch die Bewegung der Person hervorgerufene Kraft auf den ersten ringförmigen Teil überträgt. Dies stellt eine besonders einfache Lösung dar, da Hüftgurte in allen beliebigen Größen am Markt erhältlich sind. Anstelle eines Verbindungsgurtes kann jedes geeignete Verbindungsmittel verwendet werden, z.B. ein Seil, eine Kette, ein Band u.dgl.

Der (Hüft-)Gurt kann auch über Teleskopstangen derart an dem ersten ringförmigen Teil angebracht sein, sodass eine translatorische Verschiebung des Benutzers innerhalb des ersten ringförmigen Teils ermöglicht wird. Diese Verschiebung richtet sich nach vorne und nach hinten aus der Sicht des Benutzers. Durch eine solche Verschiebung des Benutzers nach vorne und nach hinten innerhalb des ersten ringförmigen Teils wird gewährleistet, dass ein gewölbter Boden zum Einsatz kommen kann, obwohl die Benutzer verschiedene Körpergrößen aufweisen können. Die Teleskopstangen sind derart angebracht, sodass kein Schlupf bei einer Rotationsbewegung des Benutzers entsteht. Eine Möglichkeit wären z.B. zwei Teleskopstangen.

Auch kann die Anbringung des (Hüft-)Gurts zur Gewährleistung einer translatorischen Verschiebung des Benutzers über ein Schienensystem innerhalb des ersten ringförmigen Teils realisiert werden. Die Schienen können hierzu links und rechts vom (Hüft-)Gurt des Benutzers angeordnet sein und erlauben ebenfalls eine schlupffreie Rotation.

Auch kann die Anbringung des (Hüft-)Gurts zur Gewährleistung einer translatorischen Verschiebung des Benutzers über ein Gummisystem innerhalb des ersten ringförmigen Teils realisiert werden. Das Gummisystem wäre derart mit dem (Hüft-)Gurt und dem ringförmigen Teil verbunden, sodass nach einer bestimmten Verschiebung eine vom Gummisystem erzeugte Rückhaltekraft, die aus der Ausdehnung des Gummisystems resultiert, so groß ist, dass der Benutzer nicht den ersten ringförmigen Teil berührt.

Alternativ bildet der erste ringförmige Teil selbst einen Hüftgurt aus. Hierbei weist der erste ringförmige Teil einen starren, ersten Teil auf, um Drehbewegungen bzw. eine Drehachse sowie Auf-Ab-Bewegungen eindeutig festlegen zu können, insbesondere gegenüber dem zweiten ringförmigen Teil. Weiters umfasst bei dieser Ausführungsform der erste ringförmige Teil einen zweiten, flexiblen Teil, der ein Anpassen und Festmachen des so gebildeten Hüftgurts an die/der Person ermöglicht. Entsprechend ist es bei einer bevorzugten Ausführungsform der erfindungsgemäßen Vorrichtung vorgesehen, dass der erste ringförmige Teil einen ersten, starren Teil und einen zweiten, flexiblen Teil umfasst, wobei der erste Teil und der zweite Teil einen Hüftgurt für die Person bilden.

Bevorzugt beträgt der Ringinnendurchmesser des ersten ringförmigen Teils mindestens 300mm, um ein Umschließen des Rumpfes, insbesondere des Hüftbereichs und/oder des Brustbereiches einer Person zu ermöglichen.

Besonders bevorzugt beträgt der Ringinnendurchmesser des ersten ringförmigen Teils höchstens 800mm, vorzugsweise höchstens 600mm. Durch diese Begrenzung nach oben hin wird gewährleistet, dass die erforderliche Anbindung zwischen Person und erstem ringförmigen Teil nicht zu viel Bewegungsspielraum erlaubt. Es hat sich gezeigt, dass eine möglichst direkte Übertragung der Bewegung der Person durch eine kurze Anbindung auf den ringförmigen Teil vorteilhaft ist. Außerdem wirkt sich diese Lösung vorteilhaft auf den Platzbedarf aus.

Bevorzugt weist die Vorrichtung zumindest eine Sensoreinrichtung zur Detektion der Bewegung und/oder des Bewegungsablaufes und/oder des Bewegungsausmaßes der von der Vorrichtung aufgenommenen Person auf. Die von der Sensoreinrichtung aufgenommenen Messdaten können verarbeitet bzw. ausgewertet werden und von einer Trainingssoftware oder einer Software für virtuelle Spiele einbezogen werden. Das dadurch erreichte Feedback erlaubt z.B. ein effektives Training oder ein besonders realitätsnahes "gaming".

Bevorzugt umfasst die Vorrichtung auch eine optische Anzeige, insbesondere ein Display, einen Bildschirm oder eine Videobrille, wobei die von der Sensoreinrichtung aufgenommenen Sensorsignale an eine Datenverarbeitungseinrichtung übermittelbar sind, die wiederum mit der optischen Anzeige (kabelgebunden oder drahtlos) kommuniziert.

Der äußere Ring besteht in einer bevorzugten Ausführungsform aus zwei, vorzugsweise identischen Hartkunststoffteilen welche am Umfang Platz aufweisen für Umlenkrollen. Diese Umlenkrollen weisen am Umfang eine bestimmte Form auf, wie zum Beispiel eine U-Form oder eine V-Form. Der innere drehbare Ring weist am äußeren Umfang eine zu den Umlenkrollen korrespondierende Form auf. Der innere drehbare Ring (d.h. der "erste ringförmige Teil") wird zusammen mit den Umlenkrollen in den äußeren Ring (d.h. in den "zweiten ringförmigen Teil") eingebaut. Durch die Form der Umlenkrollen wird eine axiale Bewegung des inneren Rings zum äußeren blockiert aber dennoch eine Rotation garantiert. Entsprechend ist es bei einer bevorzugten Ausführungsform der erfindungsgemäßen Vorrichtung vorgesehen, dass am zweiten ringförmigen Teil Umlenkrollen angeordnet sind, wobei die Umlenkrollen und der erste ringförmige Teil derart zueinander ausgelegt sind, dass der erste ringförmige Teil mittels der Umlenkrollen gegenüber dem zweiten ringförmigen Teil drehbar gelagert und gleichzeitig axial gehalten ist.

Bei einer alternativen Ausführungsvariante erstreckt sich zumindest entlang der Oberseite des ersten ringförmigen Teils eine ringförmige Scheibe und befindet sich in dem zwischen den ringförmigen Teilen und der ringförmigen Scheibe gebildeten Hohlraum ein Lager, vorzugsweise ein Kugellager. Die Scheibe verhindert eine Verschmutzung des Lagers, verringert das Verletzungsrisiko und blockiert ein axiales Verschieben zwischen den ringförmigen Teilen zumindest in einer Richtung.

Bevorzugt erstreckt sich entlang der Unterseite des ringförmigen Teils eine ringförmige Scheibe, die zusammen mit der ringförmigen Scheibe, die sich entlang der Oberseite des ersten ringförmigen Teils erstreckt, den Hohlraum begrenzt. Dadurch wird das Lager noch besser geschützt kann ein axiales Verschieben zwischen den ringförmigen Teilen auch in der anderen Richtung verhindern.

Bevorzugt ist die ringförmige Scheibe mit dem ersten ringförmigen Teil fest verbunden.

Bevorzugt umfasst das Lager mehrere Kugellager, wobei
- zumindest ein Kugellager derart an der inneren Seite des zweiten ringförmigen Teils angebracht ist, dass die Achse des Kugellagers im Wesentlichen parallel zur Achse der ringförmigen Teile steht, und das Kugellager die äußere Seite des ersten ringförmigen Teils berührt, und
- zumindest ein Kugellager derart an der inneren Seite des zweiten ringförmigen Teils angebracht ist, dass die Achse des Kugellagers im Wesentlichen radial senkrecht zur Achse der ringförmigen Teile steht, und das Kugellager die untere Seite der ringförmigen Scheibe, die sich entlang der Oberseite des ersten ringförmigen Teils erstreckt, berührt.

Dadurch kann sich der erste (innere) Teil der Ringkonstruktion in Bezug zum zweiten (äußeren) Teil nicht axial bewegen. Bevorzugt ist zwischen der ringförmigen Scheibe und dem zweiten (äußeren) ringförmigen Teil (in Richtung der Drehachse gesehen) ein Spalt ausgebildet.

Bevorzugt ist das zumindest eine Kugellager derart an der inneren Seite des zweiten ringförmigen Teils angebracht, dass die Achse des Kugellagers im Wesentlichen radial senkrecht zur Achse der ringförmigen Teile steht, und das Kugellager die obere Seite der ringförmigen Scheibe, die sich entlang der Unterseite des ersten ringförmigen Teils erstreckt, berührt. Dadurch kann sich der erste (innere) Teil der Ringkonstruktion in Bezug zum zweiten (äußeren) Teil nicht axial bewegen. Bevorzugt ist zwischen der ringförmigen Scheibe und dem zweiten (äußeren) ringförmigen Teil (in Richtung der Drehachse gesehen) ein Spalt ausgebildet.

Bevorzugt ist an der Unterseite der ringförmigen Scheibe eine Spirale mit einer Windung angebracht, welche einen Durchmesser aufweist, der im Wesentlichen so groß ist wie der Durchmesser des zweiten ringförmigen Teils.

Bevorzugt ist an dem zweiten ringförmigen Teil an mindestens einem Punkt ein Gestänge befestigt, das schräg zu der vom zweiten ringförmigen Teil aufgespannten Ebene nach unten verläuft und an seinem äußeren Ende eine Führungsstruktur, vorzugsweise eine Rohrhalterung, aufweist, die an einer länglichen Führung, vorzugsweise einem Stahlrohr geführt ist. Auch kann die Führungsstruktur ein Block sein, der innerhalb einer länglichen Führung mit speziellem Querschnitt, insbesondere innerhalb eines Führungsprofils, vorzugsweise innerhalb eines Aluminiumprofils geführt ist. Der Block kann dabei Rollen, vorzugsweise kugelgelagerte Rollen aufweisen, um eine möglichst reibungsfreie Bewegung in der länglichen Führung zu gewährleisten. Der Querschnitt des Aluminiumprofils ist so gewählt, sodass eine platzsparende Konstruktion möglich ist. Innerhalb des Profils bewegt sich die Führungsstruktur, an die vorzugsweise mehrere Kugellager angebracht sind, auf und ab. Vorzugsweise sind die Kugellager derart angebracht, sodass Momente in mehreren Achsen aufgenommen werden können.

Bevorzugt ist die längliche Führung bzw. das Führungsprofil so ausgelegt, dass man eine Umlenkrolle montieren kann und ein Feder- bzw. Gummielement mit der Führungsstruktur verbinden kann. Es befinden sich ein Kanal im Profil für das Feder- bzw. Gummielement und ein Kanal für Kugellager, welche Momente aufnehmen können in Richtung der Achse dieser Kugellager.

Bevorzugt weist die längliche Führung bzw. das Führungsprofil Löcher auf, die zur Aufnahme eines Stifts geeignet sind. Dieser Stift kann beispielsweise aus Hartkunststoff oder Metall sein und ist in Verbindung mit den Löchern ein Blockiermittel, d.h. er dient dazu, die vertikale Bewegung, insbesondere die vertikale Abwärtsbewegung der Ringkonstruktion zu blockieren. Diese Blockade bewirkt eine Sicherheitsfunktion für Anfänger, da diese nicht zu Boden stürzen können. Darüberhinaus bietet die Blockade, insbesondere für geübte Benutzer, die Möglichkeit einer Sitzfunktion, z.B. um sich auszuruhen.

Die Blockade der vertikalen Bewegung der Ringkonstruktion kann auch über andere Blockiermittel, insbesondere über elektronische/ansteuerbare Module realisiert werden, welche entweder an den Verbindungsarmen der Ringkonstruktion angebracht sind oder an definierten Plätzen an der länglichen Führung bzw. den Führungsprofilen. Diese Module können per Kabel oder auch per Funk angesteuert werden. Die Module können Servomotoren, Linearmotoren, magnetische oder pneumatische Motoren umfassen. Dadurch kann auch eine Blockade erst dann aktiviert bzw. deaktiviert werden, wenn eine bestimmte Aktion in der virtuellen Umgebung stattgefunden hat, wie z.B. das Einsteigen in ein Fahrzeug.

Daher ist es bei einer bevorzugten Ausführungsform der erfindungsgemäßen Vorrichtung vorgesehen, dass zumindest ein Blockiermittel vorgesehen ist, um eine Bewegung der Führungsstruktur in der länglichen Führung zu blockieren.

Die Feder- bzw. Gummielemente sind im Kanal der Führungsprofile mittels Befestigungselementen, die vorzugsweise verschraubbar sind, befestigt. Die Befestigungselemente sind an verschiedene Positionen anbringbar, um dadurch die Spannung der Feder- bzw. Gummielemente zu variieren. Die Feder- bzw. Gummielemente dienen zur Kompensation des Gewichtes der Ringkonstruktion.

Auch kann man in diese Führungsprofile eine Konstruktion eines Sicherheitsgurtes einbauen, welche den ungeübten Benutzer bei einer schnellen Abwärtsbewegung auffängt.

Über den Führungsprofilen kann man Gehäuse aus Kunststoff montieren, welche genau an den Querschnitt angepasst sind, um ein optisch ansprechenderes Erscheinungsbild zu gewährleisten.

An die Führungsprofile oder an die Gehäuse kann man ein Gestänge montieren, welches dazu dient ein Kabel einer Videobrille zu führen. Das Gestänge kann eine Biegung aufweisen, sodass es mit seinem oberen Ende über der Mitte der Vorrichtung liegt.

An das Gestänge kann man Halterungen montieren die dazu dienen, andere Geräte wie z.B. Kameras zu montieren. Bevorzugt umfasst die Führungsstruktur des Gestänges eine Gleitbuchse, die die längliche Führung umschließt, wobei die Führung als im Wesentlichen senkrecht nach oben stehendes und an der Plattform befestigtes Rohr ausgebildet ist.

Bevorzugt ist das Rohr in eine mit einem Bodengerüst angeschweißte Hülse gesteckt und vorzugsweise verschraubt. Bevorzugt ist die Plattform auf einem Bodengerüst ausgebildet, das aus quadratischen, gleich langen Formrohren aus Stahl, welche quadratisch aneinander geschweißt sind, gebildet wird, wobei sich zusätzlich noch Formrohre in der Mitte des quadratischen Bodengerüstes befinden, welche in Art eines Kreuzes angeordnet sind und an die Innenseite des quadratischen Bodengerüstes mittig angeschweißt sind, und sind vorzugsweise mittig auf der Außenseite der Formrohre des quadratischen Bodengerüstes zusätzliche gleich lange Formrohre angeschraubt, wobei alle oberen Seiten der Formrohre des Bodengerüstes eine plane Ebene bilden.

Entsprechend ist es bei einer bevorzugten Ausführungsform der erfindungsgemäßen Vorrichtung vorgesehen, dass die Plattform auf einem Bodengerüst ausgebildet ist, das aus Formrohren aus Stahl gebildet wird, wobei alle oberen Seiten der Formrohre des Bodengerüstes eine plane Ebene bilden.

Bevorzugt ist die Plattform durch eine mit PTFE-Spray besprühte Platte, vorzugsweise eine rostfreie Stahlplatte gebildet, wobei vorzugsweise die Platte an einem Bodengerüst angeschraubt ist.

Um ein gutes Gleitverhalten mit einem geringen Reibungskoeffizienten, insbesondere einem geringen Gleitreibungskoeffizienten µ_{G} zu erzielen, kann eine Kunststoffplatte vorgesehen sein, auf der die Person steht und sich bewegt. Zur Verstärkung ist diese Kunststoffplatte auf einer Stahlplatte angebracht. Als Kunststoffe eigenen sich hierfür insbesondere hochmolekulares Polyethylen (PE-HMW), wie z.B. PE500, und/oder hochdichtes Polyethylen (PE-HD). Daher ist es bei einer bevorzugten Ausführungsform der erfindungsgemäßen Vorrichtung vorgesehen, dass die Plattform durch eine Stahlplatte und eine darüber liegende Kunststoffplatte, vorzugsweise aus PE-HMW oder PE-HD, gebildet ist, wobei vorzugsweise die Stahlplatte an einem Bodengerüst angeschraubt ist und die Kunststoffplatte mit der Stahlplatte verbunden, vorzugsweise an diese angeschraubt bzw. geklebt ist.

Bevorzugt weist die Plattform Löcher für den Durchtritt von Lichtstrahlen von optischen Sensoren auf.

Bevorzugt umfasst die Vorrichtung ein Schuhwerk bzw. ein Textilschuhwerk für die von der Vorrichtung aufgenommene Person, welches im Zusammenspiel mit der Plattform einen geringen Reibungskoeffizienten, insbesondere einen geringen Gleitreibungskoeffizienten aufweist. Das bedeutet, dass für den Gleitreibungskoeffizient µ_{G} ≤ 0,07 gilt, insbesondere 0, 01 ≤ µ_{G} ≤ 0,02.

Bevorzugt ist der Reibungskoeffizient zwischen dem Schuhwerk bzw. dem Textilschuhwerk und der Plattform derart angepasst, sodass die Person wenig Kraft aufwenden muss für die Bewegungen, aber eine Drehbewegung der Person möglich bleibt.

Bevorzugt umfasst die Sensoreinrichtung zumindest einen optischen Sensor, der unter der Plattform angeordnet ist, wobei vorzugsweise der optische Sensor eine Computermaus ist, die mit ihrer Unterseite nach oben gerichtet ist. Die optischen Sensoren der Computermäuse werden auch Laser Gaming Sensoren genannt.

Bevorzugt sind optische Sensoren der Sensoreinrichtung derart, vorzugsweise in Form eines Sechsecks, angeordnet, dass jede Fußbewegung der Person in jeder Drehrichtung von mindestens einem optischen Sensor erkennbar ist, und wird vorzugsweise das Sensorsignal an einen Mikrocontroller gesendet, besonders bevorzugt über einen USB-Hub und einen USB-Host Shield.

Bevorzugt umfasst die Sensoreinrichtung vorzugsweise optische oder akustische Distanzsensoren, die im Bereich der Plattform angeordnet sind und dazu ausgebildet sind, die Höhe der ringförmigen Teile und/oder den Drehwinkel des ersten ringförmigen Teils relativ zum zweiten ringförmigen Teil zu messen.

Bevorzugt umfasst die Sensoreinrichtung, vorzugsweise optische oder akustische, Distanzsensoren, die im Bereich der Führung angeordnet sind und dazu ausgebildet sind, die Höhe der ringförmigen Teile zu messen.

Bevorzugt umfasst die Sensoreinrichtung vorzugsweise optische Sensoren, die im Bereich des zweiten ringförmigen Teils angeordnet sind und dazu ausgebildet sind, die Drehrichtung und den Drehwinkel des ersten ringförmigen Teils zu messen. Dies erfolgt vorzugsweise über ein spezielles Farbenmuster bzw. eine Farbcodierung am inneren Ring bzw. ersten ringförmigen Teil. Auch kann man magnetische Sensoren für die Messung des Drehwinkels verwenden.

Die Sensoren die den Drehwinkel messen, können vorzugsweise auf einem eigenen Modul angebracht sein, welches indirekt mit dem ersten drehbaren Ring bzw. ersten ringförmigen Teil befestigt ist, sodass vertikale Schwankungen am Ring kompensiert werden aber dennoch eine Rotation gewährleistet wird, obwohl das Modul nicht mitgedreht wird.

Bevorzugt umfasst die Vorrichtung zur Auswertung der Sensorsignale zumindest einen Mikrocontroller, der mit der zumindest einen Sensoreinrichtung verbunden ist, und dass vorzugsweise die Vorrichtung eine Datenverarbeitungseinrichtung, insbesondere einen Computer, umfasst, die mit dem Mikrocontroller verbunden ist. Dadurch können die Sensordaten in eine entsprechende Anwendungssoftware (Trainingssoftware, Computerspiele) eingespeist und von dieser berücksichtigt werden.

Bevorzugt erfolgt die absolute Winkelmessung des ersten ringförmigen Teils relativ zum zweiten ringförmigen Teil mittels einer Spirale, die mit einem ersten Sensor detektiert wird, und wird eine Messdifferenz gebildet zwischen dem Sensorsignal des ersten Sensors und dem Sensorsignal eines zweiten Sensors, welcher die Höhe der ringförmigen Teile misst, damit die axiale senkrechte Bewegung der ringförmigen Teile diese Messung nicht beeinflusst.

In einer Ausgestaltung betrifft die Erfindung eine Vorrichtung zur Ausübung und Erkennung von Bewegungen ohne räumlicher Fortbewegung für virtual reality Systeme (auch bekannt als Locomotion Device) bestehend aus einer drehbaren und vertikal bewegbaren Ringkonstruktion, welche einen Benutzer über einem mit Sensoren ausgestattetem Bodengerüst fixiert.

Eine Ausführungsform betrifft auch die Fixiermethode des Benutzers zum inneren Ring (erster ringförmiger Teil) der Ringkonstruktion, eine absolute Winkelmessmethode des inneren Rings der Ringkonstruktion, eine Methode zur Ausführung von Gleitbewegungen auf der Bodenplattform sowie eine Messmethode für die Gleitbewegungen der Füße des Benutzers.

Der erste ringförmige Teil der Ringkonstruktion (innerer Ring) lässt sich bevorzugt 360° um die vertikale Achse drehen und die gesamte Ringkonstruktion lässt sich vertikal in einem bestimmten Bereich axial auf- und ab- bewegen.

Ein grundlegendes Ziel der vorliegenden Erfindung war es insbesondere, die notwendigen Systemkomponenten und deren Zusammenspiel zu beschreiben, mit denen diese Vorrichtung als Sportgerät verwendet werden kann. Besonderes Augenmerk lag dabei auf der Ermöglichung von Sport in virtuellen Umgebungen.

Eine zentrale Bedeutung kommt hierbei der Aufgabe zu, einem Benutzer zu erlauben, bestimmte Bewegungen dauerhaft durchführen zu können, ohne sich in einem Raum fortzubewegen und über Sensoren die Art der Bewegung zu erfassen.

Um das Eintauchen in die virtuelle Welt zu verstärken kann eine Vibrationseinheit, auch genannt Bass Shaker, unter die Bodenplattform eingebaut werden. Dem Benutzer kann auf diese Weise Force Feedback geboten werden. Zudem kann die Bodenplattform auf einer räumlichen Bewegungsmaschine, beispielsweise auf einem Hexapod oder einer 3D / 6D Bewegungsplattform angeordnet sein. Auf diese Weise kann die Bodenplattform entsprechend der aktuellen virtuellen Umgebung, die der Benutzer wahrnimmt, verkippt werden, sodass die Neigung des Untergrunds in der virtuellen Umgebung in eine tatsächliche Neigung der Bodenplattform übertragen bzw.

übersetzt wird. Daher ist es bei einer bevorzugten Ausführungsform der erfindungsgemäßen Vorrichtung vorgesehen, dass die Vorrichtung eine Vibrationseinheit und/oder eine räumliche Bewegungsmaschine umfasst, wobei die Vibrationseinheit und/oder die räumliche Bewegungsmaschine vorzugsweise an der Plattform angeordnet sind.

Ein anderes Ziel war es, den Reibungskoeffizienten zwischen dem Schuhwerk und der Bodenplattform so zu verringern, sodass die Bewegungen ohne großen Kraftaufwand des Benutzers möglich sind, aber auch die Drehbewegung möglich ist, welche wiederum zumindest ein geringes Ausmaß an Reibung benötigt.

Die generellen Bewegungsmöglichkeiten sind: vorwärts gehen, vorwärts schleichen, vorwärts laufen, seitwärts schleichen, seitwärts gehen, seitwärts laufen, rückwärts schleichen, rückwärts gehen, rückwärts laufen, drehen, ducken, springen und Kombinationen dieser Bewegungen.

Eine lokale Bewegung wird realisiert, indem der Gurt den Benutzer daran hindert, sich im Raum fortzubewegen und seine Füße dadurch über eine mit Sensoren bestückte Bodenplattform gleiten. Die Kraft, welche benötigt wird um den Benutzer daran zu hindern, wird über die Verbindungsgurte aufgenommen, welche mit dem inneren Ring (erster ringförmiger Teil) der Ringkonstruktion verbunden sind. Auf den Füßen trägt der Benutzer spezielles Schuhwerk, welches in Kombination mit der Bodenplattform sehr geringen Reibungswiderstand aufweist.

Wichtig war es auch, die Bewegungen, welche über die Sensoren erfasst werden, direkt in der Vorrichtung zu berechnen und an die Treibersoftware am Computer zu senden.

Dies wird durch einen Mikrocontroller erreicht, welcher die Signale der Sensoren bearbeitet.

Eine weitere Aufgabe war es, eine Möglichkeit zu finden, um die Bewegungsrichtung der Hüfte des Benutzers zu erfassen und mit der Bewegungsrichtung der Fußbewegung des Benutzers zu vergleichen.

Damit die Richtung der Hüfte im Bezug zu einer fix definierten Richtung der Vorrichtung erfasst werden kann, war es nötig, eine Methode zu finden, welche den Winkel des inneren Rings der Ringkonstruktion absolut misst. Auch ist es möglich den Winkel relativ zu messen und dabei den Ring auf eine Nullposition zu kalibrieren.

Dies wird vorzugsweise über einen zusätzlichen Ring realisiert, welcher radial an einer Seite durchgeschnitten wird und wie eine Spirale verbogen wird. Diese Spirale wird unten an den drehbaren inneren Ring der Ringkonstruktion angebracht und ermöglicht es durch eine Distanzmessung von einem an dem Bodengerüst fix montierten Distanzsensor, jeder Drehung eine Distanz zuzuordnen. Jeder Winkel des inneren Rings führt somit zu einer Distanzänderung zwischen Spirale und Sensor. Hierbei ist das Auflösungsvermögen des Sensors und die Versetzung der Enden der Spirale wichtig. Damit die vertikale Bewegung der gesamten Ringkonstruktion diese Winkelmessung nicht beeinflusst, sorgt ein zweiter Distanzsensor, welcher nur die Höhe der Ringkonstruktion misst, für eine Korrektur des Messwertes. Dies wird erreicht durch eine Differenzbildung der Messwerte beider Sensoren.

Die Erfassung der Fußbewegung erfolgt über mehrere Computermäuse, welche nach oben gerichtet an die Unterseite der mit kleinen Löchern versehenen Bodenplattform angebracht sind. Bzw. erfolgt die Erfassung über optische Laser Gaming Sensoren, welche üblicherweise in Computermäusen eingebaut sind. Diese sind vorzugsweise in Form eines Sechsecks angeordnet für eine optimale Erfassung der Fußbewegungen.

Wichtig war es, das Gewicht der Ringkonstruktion am Benutzer zu reduzieren. Dies wird in einer bevorzugten Ausführungsform über geeignete Reibung an den Gleitbuchsen und den vertikalen Gleitstangen bzw. länglichen Führungen erreicht. Durch Anziehen der Schraube der Rohrhalterung kann man die Kraft erhöhen, mit der die Gleitbuchse an die jeweilige Gleitstange drückt.

Alternativ oder ergänzend kann das Gewicht der Ringkonstruktion durch Gegengewichte, Federelemente oder Gummielemente kompensiert werden. Insbesondere durch eine Konstruktion mit Umlenkrollen kann man die Gewichtskompensation realisieren.

Die Arme des Gestänges, mit welchem die Ringkonstruktion mit der Führung verbunden ist, werden mittels Seilen mit Gegengewichten verbunden. Diese Gegengewichte können sich auf und ab bewegen und sind vorzugsweise an der Ober- und Unterseite mit den Seilen verbunden. Die Seile wiederum sind über Umlenkrollen verlegt, welche an der länglichen Führung bzw. dem Führungsprofil befestigt sind.

Alternativ oder zusätzlich sind die Arme des Gestänges mit Gummielementen oder Federelementen verbunden, welche an der Linearführungen fixiert sind über Umlenkrollen geführt sein können und. Dadurch wird das Gewicht der Ringkonstruktion kompensiert und man kann zusätzlich eine Kraft erzeugen die entweder bei starker Spannung der Elemente nach oben gerichtet ist oder bei schwacher Spannung nach unten gerichtet ist.

Entsprechend ist es bei einer bevorzugten Ausführungsform der erfindungsgemäßen Vorrichtung vorgesehen, dass zumindest ein Kompensationsmittel vorgesehen ist, um die Gewichtskraft, die aufgrund der Konstruktion der Vorrichtung auf den ersten ringförmigen Teil wirkt, zumindest teilweise zu kompensieren, wobei es sich bei dem zumindest einen Kompensationsmittel vorzugsweise um ein Gegengewicht, um ein Federelement oder um ein Gummielement handelt.

Darüberhinaus ist es bei einer besonders bevorzugten Ausführungsform der erfindungsgemäßen Vorrichtung vorgesehen, dass das Gestänge mittels eines Seils mit dem mindestens einen Kompensationsmittel wirkverbunden ist, wobei das Seil über eine an der länglichen Führung angeordneten Umlenkrolle umgelenkt wird.

Auch kann man Elemente wie Kameras, Ventilatoren, Heizstrahler oder Luftdüsen an die Steher bzw. länglichen Führungen anbringen, um dadurch das Erlebnis in der virtuellen Umgebung noch realer zu machen.

### KURZE BESCHREIBUNG DER FIGUREN

### Die Erfindung wird nun anhand eines(von)

Ausführungsbeispiels(en) näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine erfindungsgemäße Vorrichtung mit einer darin aufgenommenen Person
- Fig. 2: den ersten ringförmigen Teil mit einem daran eingehakten Gurt
- Fig. 3: in einer Explosionsansicht die durch die ringförmigen Teile gebildete Ringkonstruktion
- Fig. 4: das Bodengerüst ohne Plattform
- Fig. 5: die Befestigung der Verbindungsstangen mit den Rohrhalterungen
- Fig. 6: die Befestigung der Gleitstangen mit den Buchsen des Bodengerüstes
- Fig. 7: die erfindungsgemäße Vorrichtung von der Seite
- Fig. 8: eine alternative Ausführungsformen der Erfindung
- Fig. 9: eine weitere alternative Ausführungsformen der Erfindung
- Fig. 10: eine weitere alternative Ausführungsformen der Erfindung in axonometrischer Ansicht von schräg oben
- Fig. 11: eine Detailansicht mit einer länglichen Führung der Ausführungsform aus Fig. 10
- Fig. 12: eine Detailansicht einer Führungsstruktur der Ausführungsform aus Fig. 10
- Fig. 13: die Ausführungsform aus Fig. 10 in axonometrischer Ansicht von schräg unten
- Fig. 14: in einer Explosionsansicht die durch die ringförmigen Teile gebildete Ringkonstruktion der Ausführungsform aus Fig. 10
- Fig. 15: eine Detailansicht des oberen Endes der länglichen Führung der Ausführungsform aus Fig. 10
- Fig. 16: eine längliche Führung der Ausführungsform aus Fig. 10 ohne Gehäuse
- Fig. 17: eine Ringkonstruktion einer weiteren Ausführungsform

### WEGE ZUR AUSFÜHRUNG DER ERFINDUNG

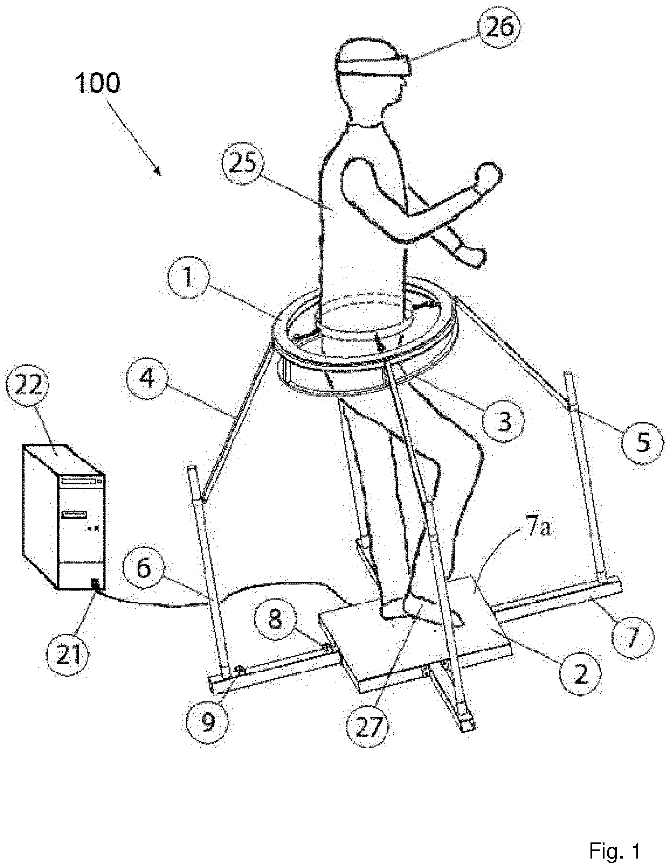

Fig. 1 zeigt eine erfindungsgemäße Vorrichtung 100, die z.B. als Trainingsvorrichtung oder (Reality) Simulationsvorrichtung bzw. Bewegungsvorrichtung für virtuelle Spiele ausgebildet ist. Die Vorrichtung 100 dient zum Aufnehmen zumindest einer Person 25 und zur teilweisen Einschränkung der Bewegungsfreiheit der in der Vorrichtung 100 aufgenommenen Person 25 und umfasst eine Plattform 7a, auf der die Person 25 steht, und einen oberhalb der Plattform 7a angeordneten ersten ringförmigen Teil 13 bzw. Ring zum Umschließen der zumindest einen Person 25. Der ringförmige Teil 13 ist relativ zur Plattform 7a drehbar und in Bezug zur Plattform 7a auf- und ab bewegbar.

In der dargestellten Ausführungsform weist die Vorrichtung 100 einen zweiten ringförmigen Teil 12 auf, wobei die durch den ersten ringförmigen Teil 13 aufgespannte Ebene und die durch den zweiten ringförmigen Teil 12 aufgespannte Ebene im Wesentlichen parallel zueinander stehen und der erste ringförmige Teil 13 innerhalb des zweiten ringförmigen Teils 12 angeordnet und an diesem um eine Drehachse 13a, die im Wesentlichen normal zu der vom ersten ringförmigen Teil 13 aufgespannten Ebene steht, drehbar gelagert ist. Der zweite ringförmige Teil 12 ist relativ zur Plattform 7a im Wesentlichen drehfest.

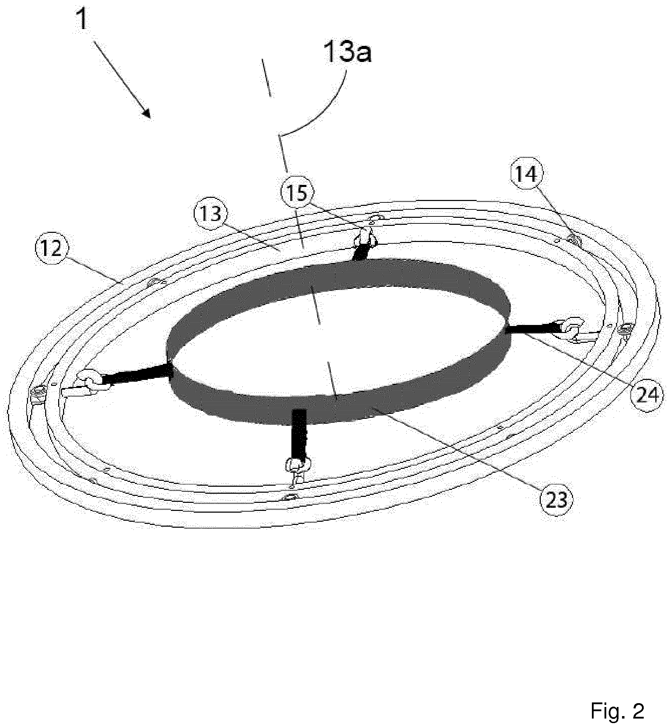

Der erste ringförmige Teil 13 ist relativ zur Plattform 7a um eine Drehachse 13a drehbar, die im Wesentlichen normal zu der vom ringförmigen Teil 13 aufgespannten Ebene steht (Fig. 2). In der in Fig. 1 dargestellten Ausführungsform steht die vom ersten ringförmigen Teil 13 aufgespannte Ebene im Wesentlichen parallel zur Fläche der Plattform 7a.

Der ringförmige Teil 13 ist in Bezug zur Plattform 7a im Wesentlichen in vertikaler Richtung auf- und ab bewegbar, wobei der ringförmige Teil 13 über eine im Wesentlichen vertikale Führung in Form von Gleitstangen 6 mit der Plattform 7a verbunden ist. Der erste ringförmige Teil 13 ist dadurch relativ zur Plattform 7a in Bezug auf eine translatorische Bewegung in der Horizontalen fixiert.

Die Vorrichtung 100 weist zumindest eine Sensoreinrichtung (z.B. Distanzsensoren 8, 9 und/oder optische (Bewegungs-) Sensoren im Bereich der Plattform 7a und/oder seitlich positionierte Sensoren) zur Detektion der Bewegung und/oder des Bewegungsablaufes und/oder des Bewegungsausmaßes der von der Vorrichtung 100 aufgenommenen Person 25 auf.

Weiters sind in der bevorzugten Ausführungsform von Fig. 1 zu sehen: die Ringkonstruktion 1 mit der sich die Person 25 fixiert, die Spirale 3 zur Messung des Winkels des ersten ringförmigen Teil 13 (innerer Ring) der Ringkonstruktion 1, die Verbindungsstangen bzw. Gestänge 4, welche die Ringkonstruktion 1 mit den Rohrhalterungen 5 verbindet, die wiederum die Gleitbuchsen 16 an die vertikalen Gleitstangen 6 presst, das Bodengerüst 7 an dem die vertikalen Gleitstangen 6 über eine angeschweißte Buchse bzw. Hülse 17 verbunden sind, die Bodenplatte 2, welche an das Bodengerüst 7 angeschraubt ist und die Plattform 7a bildet, auf der man sich dann bewegt, der optische Distanzsensor 8, welcher die Höhe zur Spirale 3 misst, der optische Distanzsensor 9, welcher die Höhe der Ringkonstruktion 1 (z.B. in Bezug zur Plattform) misst, die speziellen Schuhe 27, welche geringe Reibung auf der Bodenplatte 2 aufweisen, das USB Kabel 21 zur Verbindung der Vorrichtung mit dem Computer 22, und eine Anzeige 26 in Form eines head mounted displays.

Fig. 2 zeigt den Gurt 23 verbunden mit dem drehbaren inneren Ring 13 der Ringkonstruktion 1, welcher die Person 25 mit der Vorrichtung 100 fixiert. Hierbei sind hervorgehoben: Der Gurt 23, der über die Verbindungsgurte 24 mit den Haken 15 des inneren Rings 13 verbunden wird, die Kugellager 14, welche die Drehung des ersten ringförmigen Teils 13 (innerer Ring) innerhalb des zweiten ringförmigen Teils 12 (äußerer Ring) ermöglichen.

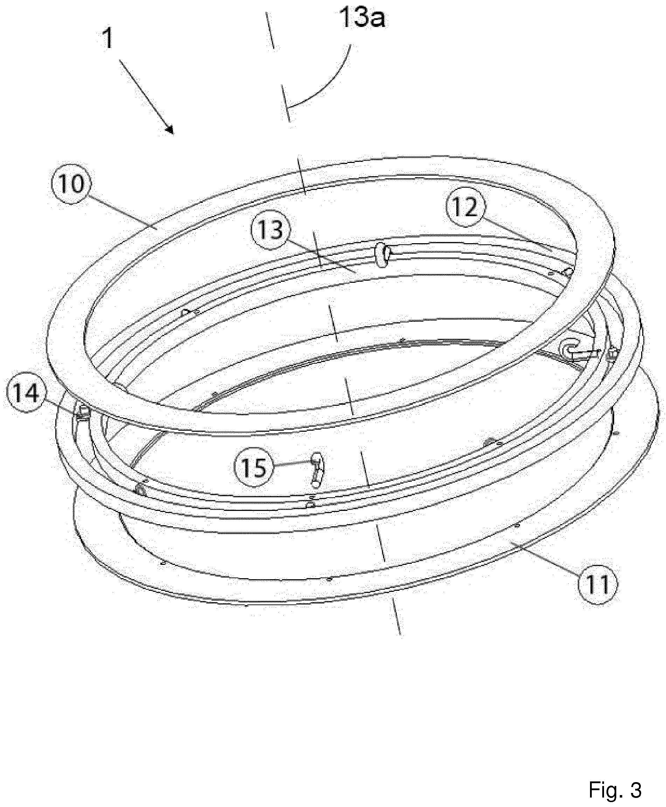

Fig. 3 zeigt eine Explosionsansicht der Ringkonstruktion 1. Hierbei sind hervorgehoben: der innere Ring 13, an dem eine obere Scheibe 10 und eine untere Scheibe 11 angebracht sind, die Kugellager 14, die Anhängevorrichtung 15 in Form von Haken zum Anbinden der Person 25, und der äußere Ring 12. Die Kugellager sind in dem von den Ringen 12, 13 und den Scheiben 10, 11 gebildeten ringförmigen Hohlraum angeordnet.

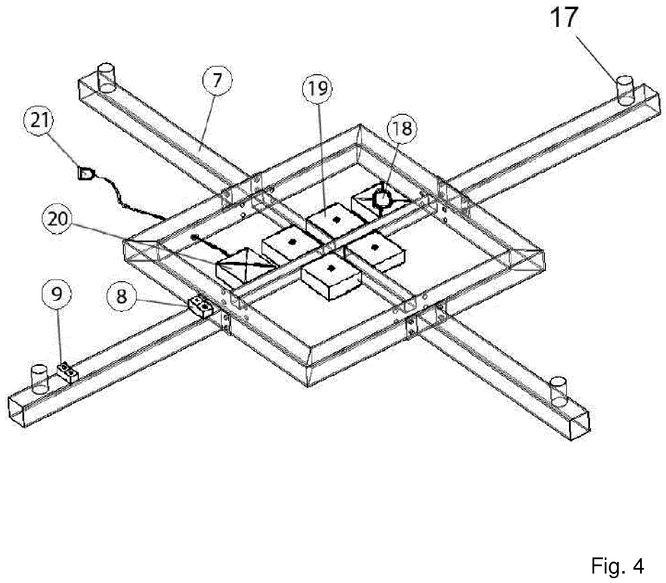

Fig. 4 zeigt das Bodengerüst 7 ohne angebrachte Bodenplattform. Die Bodenplattform wird an das Bodengerüst 7 geschraubt und hat Löcher für die optischen Sensoren, welche die Fußbewegungen messen. Hierbei wurde hervorgehoben: das Bodengerüst 7, der optische Distanzsensor 8 zur Messung der Höhe zur Spirale 3, der optische Distanzsensor 9 zur Messung der Höhe der Ringkonstruktion 1, die optischen Sensoren 19 zur Messung der Bewegungen der Füße, ein USB-Hub 18, welcher die Signale der optischen Sensoren 19 an einen Mikrocontroller 20 weiterleitet, ein USB Kabel 21 zum Verbinden der Vorrichtung mit einem Computer 22.

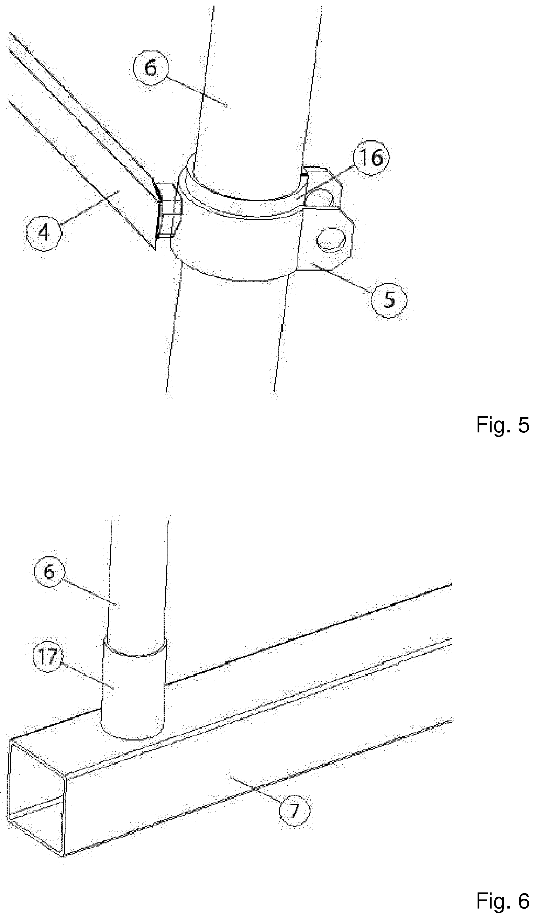

Fig. 5 zeigt die Verbindungsstangen, welche über eine Schraube mit den Rohrhalterungen 5 verbunden sind. Diese Rohrhalterungen 5 fixieren die Gleitbuchsen 16 an die vertikalen Gleitstangen 6. Hier wurde hervorgehoben: die Verbindungsstange bzw. Gestänge 4, die Rohrhalterung 5, die Gleitbuchse 16 und die Gleitstange 6.

Fig. 6 zeigt die Befestigung der Gleitstangen 6 mit dem Bodengerüst 7. Die Gleitstangen 6 werden hierbei in die Buchsen bzw. Hülsen 17 gesteckt, welche an das Bodengerüst 7 angeschweißt sind, und dort zusätzlich mit einer Schraube fixiert. Hierbei sind hervorgehoben: die Gleitstange 6, die Buchse bzw. Hülse 17, das Bodengerüst 7.

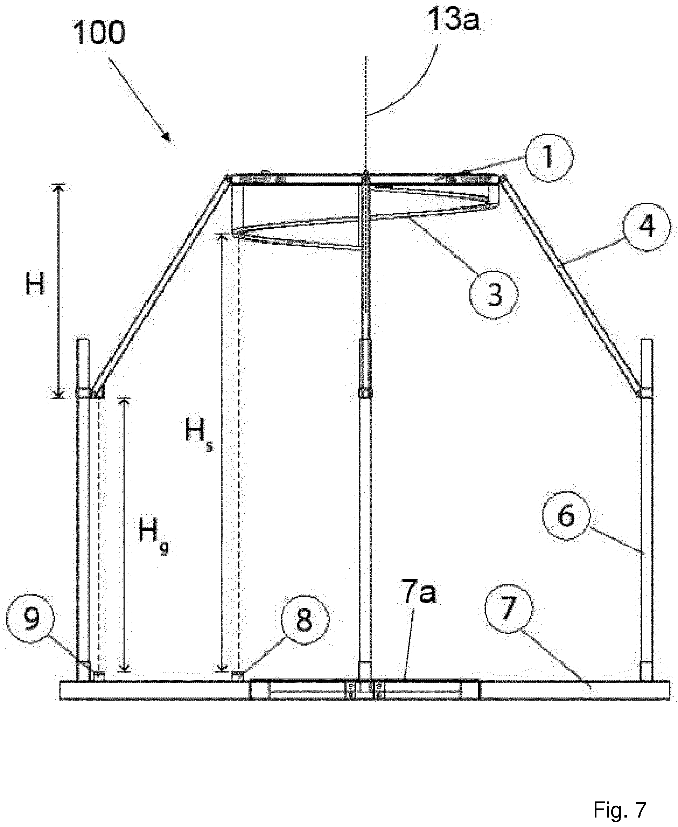

Fig. 7 zeigt die Vorrichtung 100 von der Seite und die Messstrahlen der Sensoren, welche die Höhe der Ringkonstruktion 1 und die Höhe zur Spirale 3 messen. Hierbei sind hervorgehoben: die Ringkonstruktion 1, die Spirale 3, die Verbindungsstangen 4, die Gleitstangen 6, das Bodengerüst 7, der optische Distanzsensor 8 zur Messung der Höhe zur Spirale, der optische Distanzsensor 9 zur Messung der Höhe der Ringkonstruktion 1.

Im Folgenden erfolgt eine detaillierte Beschreibung dieser Ausführungsform:
Die Vorrichtung 100 besteht aus einem (Spezial)Gurt 23, einer Plattform 7a und einer Ringkonstruktion 1, welche vorzugsweise über Gleitbuchsen und/oder Haken miteinander verbunden sind.

### Bodenplattform:

Die Bodenplattform umfasst ein Bodengerüst 7, eine Bodenplatte 2 und die Elektronik der Vorrichtung 100. Die Bodenplatte 2, die die Plattform 7a bildet besteht aus quadratischem rostfreiem Flachstahl, welcher vier kleine Löcher hat. Der Durchmesser dieser Löcher beträgt vorzugsweise etwa 4mm, gerade so groß, dass die optischen Sensoren unter dieser Platte die Füße der Person 25 erkennen können. Die Anordnung dieser Löcher ist quadratisch in einem Abstand von etwa 130mm, sodass bei jeder Bewegungsrichtung mindestens ein Fuß immer erkannt wird. Damit der Reibungskoeffizient zwischen der Platte und dem Schuhwerk des Benutzers reduziert wird, wird die Platte noch mit PTFE-Spray besprüht. Die Platte wird mit Schrauben an den Ecken an das Bodengerüst 7 geschraubt. Das Bodengerüst 7 besteht aus quadratischen gleich langen Formrohren aus Stahl, welche quadratisch aneinander geschweißt sind. Damit sich die Bodenplatte bei Benutzung nicht zu sehr durchbiegt befinden sich zusätzlich noch Formrohre in der Mitte des quadratischen Bodengerüstes 7. Diese Formrohre sind wie ein Kreuz angeordnet und an die Innenseite des quadratischen Bodengerüstes 7 mittig angeschweißt. Mittig auf der Außenseite der Formrohre des quadratischen Bodengerüstes 7 sind vier zusätzliche gleich lange Formrohre angeschraubt. Alle oberen Seiten der Formrohre des Bodengerüstes bilden eine plane Ebene an der Oberseite. An den vier äußeren Formrohren sind kurze Hülsen 17 angeschweißt welche nach oben gerichtet sind. In diesen vier Hülsen 17 stecken runde Stahlrohre 6. Diese Rohre 6 sind gleich lang und werden zusätzlich an den Hülsen 17 angeschraubt. An den inneren Formrohren, welche wie ein Kreuz angeordnet sind, werden vier optisch funktionierende Computermäuse (z.B. von der Firma A4Tech; Modell N-350) quadratisch angeordnet angebracht. Die Unterseite dieser Computermäuse ist nach oben gerichtet und bildet mit der oberen Seite des Bodengerüstes eine ebene Fläche. Die Anordnung ist so angepasst, dass der optische Lichtstrahl der Computermäuse durch die Löcher der Bodenplatte leuchtet. Zusätzlich sind noch ein USB-Hub 18 und ein Mikrocontroller 20 (z.B. Arduino Mikrocontroller) an die Innenseite des Bodengerüstes 7 angebracht. Die vier Computermäuse werden an den USB-Hub 18 angeschlossen und der USB-Hub 18 über ein USB-Host Shield an den Mikrocontroller. Auf einem der vier äußeren Formrohre des Bodengerüstes 7 befinden sich zwei optische Distanzmesssensoren 8, 9 (z.B. Distanz-Sensor GP 2 Y0A 02 YK Sharp), welche mittels Triangulationsprinzip arbeiten bzw. ausgewertet werden. Einer dieser Sensoren wird kurz vor der Hülse 17 senkrecht nach oben gerichtet angebracht und der andere in der Nähe der Verbindung des Formrohres mit dem quadratischen Gerüst. Auch dieser ist senkrecht nach oben gerichtet. Diese zwei Sensoren werden ebenfalls an den Mikrocontroller angeschlossen. An den Mikrocontroller 20 wird ein USB-Kabel angeschlossen und dieses Kabel dient dann zur Kommunikation mit dem Computer 22.

### Ringkonstruktion 1:

Die Ringkonstruktion 1 besteht aus einem inneren drehbaren Teil 13 und einem äußeren fixierten Teil 12.

Der innere drehbare Teil 13 besteht vorzugsweise aus einem Aluminiumring und zwei ringförmigen Aluminiumscheiben 10, 11. Der innere Durchmesser des ersten bzw. inneren Rings 13 und der innere Durchmesser der beiden ringförmigen Scheiben 10, 11 ist gleich groß. Der äußere Durchmesser der beiden Scheiben 10, 11 ist jedoch größer als jener des Rings. Der Querschnitt des inneren Rings 13 ist rechteckig, wobei die kürzere Seite oben und unten ist. Die beiden Scheiben 10, 11 sind oben bzw. unten an dem inneren Ring 13 angeschraubt. Der äußere Teil der Ringkonstruktion 1 besteht aus einem zweiten (äußeren) Ring 12, an dem sich innen z.B. fünfzehn Kugellager 14 befinden und außen an vier Punkten quadratische Aluminium-Formrohre befestigt sind. Der Querschnitt des äußeren Rings 12 ist vorzugsweise quadratisch, wobei die Seitenlänge des Quadrats kürzer ist als die vertikale längere Seite des Querschnitts des inneren Rings 13. Der innere Radius des äußeren Rings 12 ist z.B. um etwa 20mm größer als der äußere Radius des inneren Rings 13, sodass Kugellager 14 mit einem äußeren Durchmesser von 19mm Platz im Zwischenraum der Ringe 12, 13 haben. Dadurch, dass die Seitenlänge des Querschnitts des äußeren Rings 12 kürzer ist als die Seitenlänge der langen Seite des Querschnitts des inneren Rings 13, passt der äußere Ring 12 zwischen die beiden Scheiben 10, 11, welche an den inneren Ring 13 angeschraubt wurden.

An die Innenseite des äußeren Rings 12 wird ein Rundstahl angeschweißt. Dieser Rundstahl dient als Fixierung für die Kugellager 14. Der Rundstahl wird auf drei verschiedene Arten angeschweißt, sodass sich drei Positionierungsmöglichkeiten für die Kugellager 14 ergeben. Bei der ersten Art wird der Rundstahl so an die innere Seite des äußeren Rings 12 angeschweißt, dass die Achse des Kugellagers 14 parallel zur Achse der Ringe 12, 13 ist und das Kugellager 14 die äußere Seite des inneren Rings 13 berührt. Dieser Vorgang wird an sechs Punkten über den gesamten Umfang des Rings 12 verteilt durchgeführt. Dies ermöglicht nun die Drehung des inneren Rings 13.

Damit sich der innere Teil 13 der Ringkonstruktion 1 in Bezug zum äußeren Teil 12 nicht axial bewegen kann, wird an z.B. neun Stellen auf der inneren Seite des äußeren Rings 12 der Rundstahl so angeschweißt, dass die Achse des angebrachten Kugellagers 14 radial senkrecht zur Achse des äußeren Ringes 12 zeigt. Auch diese Stellen sind über den Umfang gleichmäßig verteilt. An z.B. sechs dieser Stellen wird der Rundstahl so an die Innenseite des äußeren Rings 12 geschweißt, dass die Kugellager 14 die untere Seite der oberen Scheibe 10 berühren und zwischen Scheibe 10 und obere Seite des äußeren Rings 12 ein Spalt ist, sodass sich Scheibe 10 und Ring 12 nicht berühren. An z.B. drei dieser Stellen wird der Rundstahl so angeschweißt, sodass die Kugellager 14 die obere Seite der unteren Scheibe 11 berühren und zwischen Scheibe 11 und Ring 12 ein Spalt ist, sodass sich Scheibe 11 und Ring 12 auch unten nicht berühren.

Die vier quadratischen Formrohre an der äußeren Seite des äußeren Rings 12 sind durch eine Schraube starr mit dem äußeren Ring 12 verbunden. Diese Formrohre sind in etwa einem Winkel von 45 Grad nach unten geneigt und an den äußeren Enden dieser Formrohre sind Rohrhalterungen 5 angeschraubt. Diese Rohrhalterungen 5 werden an die vier runden Stahlrohre 6 der Bodenplattform über eine PTFE Gleitbuchse 16 angebracht. Die Rohrhalterungen 5 drücken auf die PTFE Gleitbuchsen 16, welche wiederum an die runden Stahlrohre 6 drücken. Durch Variieren der Presskraft der Rohrhalterungen 5 lässt sich die Reibung zwischen den PTFE Gleitbuchsen 16 und den Stahlrohren 6 variieren. Die Formrohre sind genau so lang, dass sich bei der untersten Lage der Ringkonstruktion 1 wo sich die PTFE Gleitbuchsen 16 und die Hülsen 17 berühren, eine Höhe zur unteren Scheibe 11 des inneren Teils 13 von etwa 550mm ergibt.

An der Innenseite des inneren Teils 13 der Ringkonstruktion 1 sind vier Haken angeschraubt, welche gleichmäßig über den Umfang verteilt sind und als Anhängevorrichtung dienen. Diese Haken dienen zur Fixierung des (Spezial)Gurtes 23. An der unteren Seite der unteren Scheibe 11 des inneren Teiles 13 der Ringkonstruktion 1 befindet sich eine Spirale 3 (z.B. aus Plastik) dessen äußerer Durchmesser so groß ist wie der Durchmesser der Scheibe 11. Die Spirale 3 hat genau eine Windung und hat dabei einen Versatz von etwa 160mm. Die Spirale 3 wird an vier Punkten an die Scheibe 11 durch geeignete Verbindungstücke aus Aluminium Rundstahl angeschraubt.

### Der Spezialgurt:

Der Spezialgurt besteht auf einem handelsüblichen Klettergurt an dem zusätzlich vier Verbindungsgurte 24 angenäht wurden. Die Länge dieser Verbindungsgurte 24 lässt sich variieren und an ihren Enden befindet sich ein Stahlring. Die Anordnung der vier Verbindungsgurte 24 ist gleichmäßig über den Umfang des Gurtes 23 verteilt. Der (Kletter)Gurt 23 hat nur eine Hüftfixierung und eine Beinfixierung aber keine Schulterfixierung. Zum Verbinden der Person 25 mit der Vorrichtung 100, wird der Gurt 23 angezogen, werden die Stahlringe der Verbindungsgurte 24 an die jeweiligen Haken angebracht und die Länge der vier Verbindungsgurte 24, welche den Gurt 23 mit der Ringkonstruktion 1 verbinden, derart gekürzt, dass die Verbindungsgurte 24 fest gespannt sind. Nun können die Verbindungsgurte 24 die Kräfte aufnehmen, welche beim Bewegen in der Vorrichtung 100 durch den Benutzer entstehen.

### Messtechnik:

Damit Benutzer mit verschiedener Körpergröße die Vorrichtung 100 optimal verwenden können, muss man das Gerät, insbesondere die Sensoreinrichtung samt Auswerteeinrichtung als erstes kalibrieren.

### Fußbewegungen:

Wenn sich der Benutzer auf der Bodenplattform fortbewegen will, hindern ihn die vier gespannten Verbindungsgurte 24 daran, sodass seine Füße beginnen werden, auf der Bodenplatte zu gleiten. Dadurch, dass sich kleine Löcher auf dieser Platte befinden und darunter die optischen Computermäuse angeordnet sind, wird mindestens ein Fuß beim Gleiten über diese Löcher durch die Computermäuse erkannt. Die Signale der Computermäuse, welche Bewegungen registriert haben, werden an den Mikrocontroller 20 gesendet. Dieser errechnet nun eine Richtung und eine Geschwindigkeit der Bewegung. Diese Daten werden über das USB-Kabel an die Treibersoftware des Computers 22 gesendet.

### Position des inneren Teils 13 der Ringkonstruktion 1:

Der äußere Distanzsensor 9 auf der Bodenplattform misst den Abstand zum Formrohr der Ringkonstruktion 1, welcher mit der Rohrhalterung 5 verbunden ist, und gibt das Signal dem Mikrocontroller 20 weiter. Dieses Signal dient dazu, um Sprung- und Duck- Bewegungen zu registrieren. Diese Bewegungen erfolgen durch axiale Aufwärts- und Abwärts-Verschiebung der Ringkonstruktion 1. Nach der Kalibrierung wird ein bestimmter Höhenwert festgelegt und durch Vergleich des Wertes vom äußeren Distanzsensor 9 mit dem Höhenwert wird erkannt, ob der Benutzer sich duckt oder springt. Der innere Distanzsensor 8 misst den Abstand zur Spirale 3 und gibt das Signal dem Mikrocontroller 20 weiter.

Durch Drehung des inneren Teils 13 der Ringkonstruktion 1 ändert sich der Abstand zwischen dem inneren Distanzsensor 8 und der Spirale 3; somit kann man den Winkel des inneren Teiles 13 zum äußeren Teil 12 der Ringkonstruktion 1 absolut messen. Um einen gegebenenfalls aufgrund der axialen Auf- und Ab-Bewegungen der Ringkonstruktion 1 verfälschten Messwert des inneren Distanzsensors 8 in Bezug zur Spirale 3 zu berücksichtigen, wird eine Differenz der Werte zwischen den beiden Distanzsensoren 8, 9 gebildet. Somit wird gewährleistet, dass jeder Winkel erfasst werden kann, bei jeder möglichen Höhenlage der gesamten Ringkonstruktion 1.

Der Mikrocontroller 20 sendet diese Werte an die Treibersoftware auf dem Computer 22. Die Treibersoftware wertet die Daten des Mikrocontrollers 20 aus und gibt dann die eingestellten Befehle an die Software weiter, welche man zusammen mit der Vorrichtung 100 verwenden möchte.

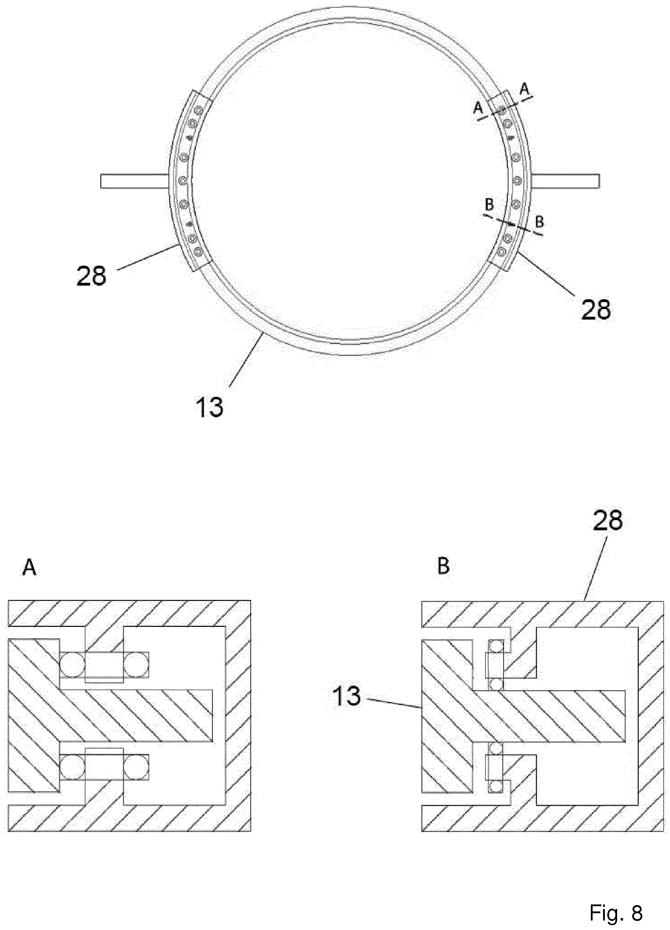

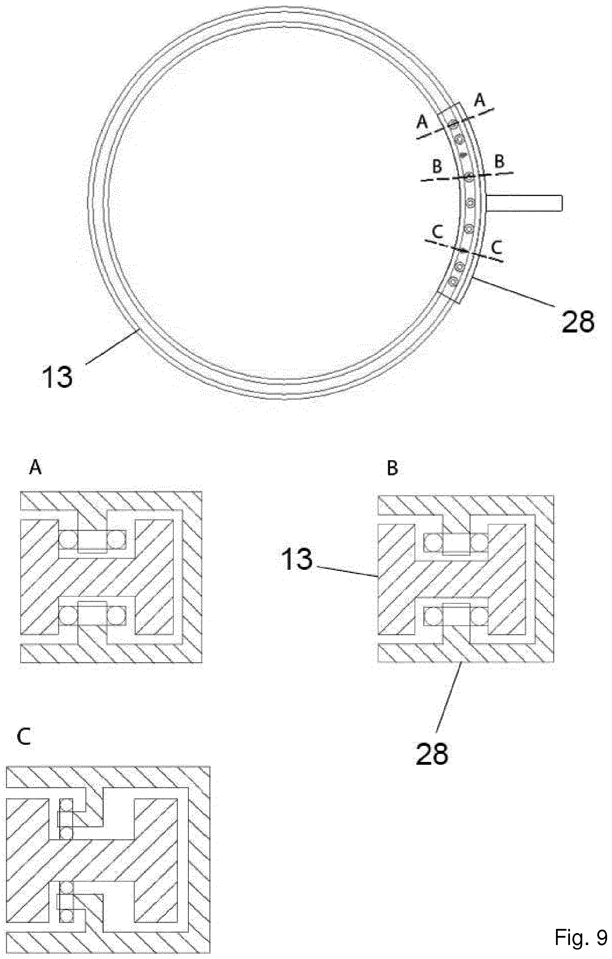

Die Fig. 8 und 9 zeigen alternative Ausführungsformen der Erfindung. Anstelle eines zweiten (äußeren) Ringes wird der erste ringförmige Teil 13 durch ringsegmentförmige Teile 28 gehalten und drehbar gelagert.

Fig. 8 zeigt eine Ausführung mit zwei ringsegmentförmigen Teile 28, die einander gegenüberliegen und den ersten ringförmigen Teil 13 zwischen sich aufnehmen. Der Querschnitt des ersten ringförmigen Teils 13 ist T-förmig, während der Querschnitt des ringsegmentförmigen Teils 28 U-förmig ist den ringförmigen Teil (13) umgibt.

Verschieden orientierte Lager (Schnitt A-A und Schnitt B-B), d.h. mit verschieden orientierten Achsen, verhindern bzw. beschränken eine gegenseitige Verschiebung der Teile 13 und 28 in axialer Richtung und in radialer Richtung.

Die durch den ersten ringförmigen Teil 13 aufgespannte Ebene und die durch die ringsegmentförmigen Teile 28 aufgespannte Ebene stehen im Wesentlichen parallel zueinander und der erste ringförmige Teil 13 ist an den ringsegmentförmigen Teilen 28 um eine Drehachse 13a, die im Wesentlichen normal zu der vom ersten ringförmigen Teil 13 aufgespannten Ebene steht, drehbar gelagert. Auch hier ist der ringsegmentförmige Teil 28 relativ zur Plattform 7a drehfest und zusammen mit dem ersten ringförmigen Teil 13 auf und ab bewegbar (in Fig. 8 nicht dargestellt).

In Fig. 9 hat der erste ringförmige Teil 13 H-förmigen Querschnitt, und es ist nur ein ringsegmentförmiger Teil 28 vorgesehen. Wie aus den Schnitten A-A, B-B und C-C zu sehen sind drei verschieden orientierte Lager, d.h. mit verschieden orientierten Achsen erforderlich, um eine gegenseitige Verschiebung der Teile 13 und 28 zu verhindern/beschränken.

Um eine Rotation des ringsegmentförmigen Teils 28 aus Fig. 9 in Bezug zur Plattform 7a auch bei nur einer (vertikalen) Führungsstange zu verhindern, könnte eine längliche Nut in die Führungsstange eingebracht (gefräst) werden, die mit einem in die Nut ragenden Vorsprung einer Gleitbuchse (drehfest) zusammenwirkt. Möglich wäre auch das Vorsehen einer zweiten Führungsstange, wobei die beiden dazugehörigen Gleitbuchsen starr miteinander verbunden sind.

Die Vorteile der in Fig. 8 und 9 dargestellten Varianten bestehen insbesondere in der Materialeinsparung und der damit verbundenen Gewichtsreduktion für den Benutzer.

Es wird ausdrücklich darauf hingewiesen, dass die in Bezug auf den zweiten ringförmigen Teil 12 offenbarten Merkmale, insbesondere dessen Anbindung an die Plattform 7a, auch für den ringsegmentförmigen Teil 28 gilt bzw. analog angewandt werden kann.

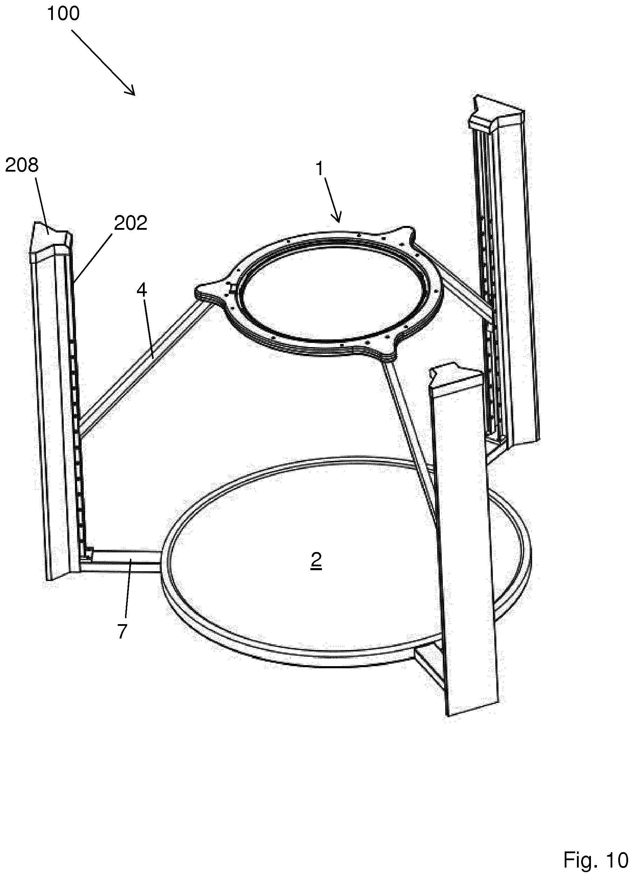

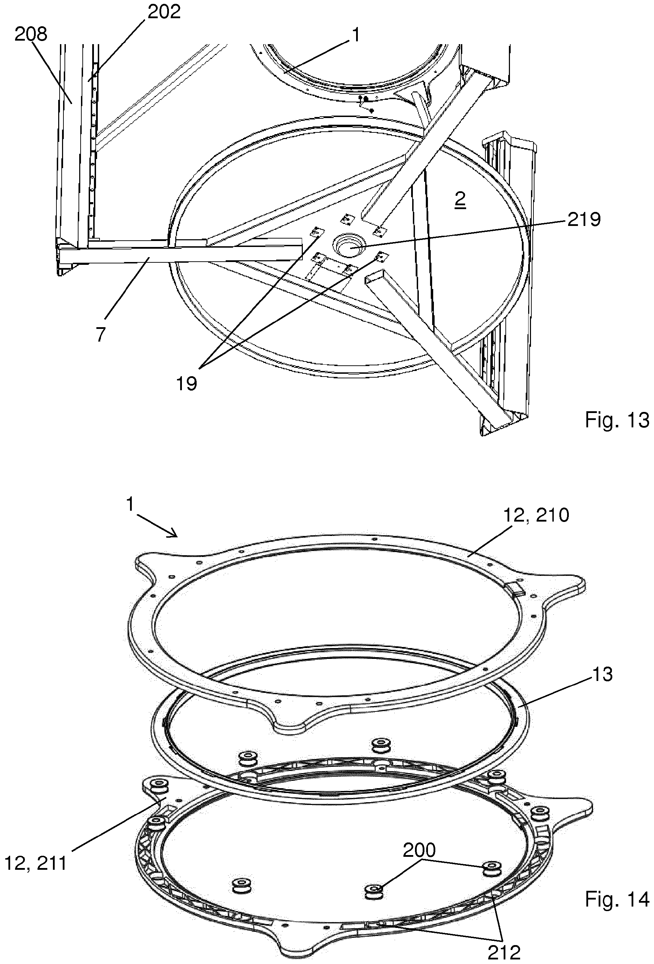

Fig. 10 zeigt eine weitere Ausführungsform der erfindungsgemäßen Vorrichtung 100, wobei als längliche Führungen statt Gleitstangen 6 Führungsprofile 202, vorzugsweise aus Aluminium verwendet werden. Insgesamt weist das die Ringkonstruktion 1 mit den Führungsstrukturen verbindende Gestänge 4 drei Verbindungsstangen auf, und entsprechend sind drei Führungsprofile 202 vorgesehen. Die drei Führungsprofile 202 stehen vertikal und sind am Bodengerüst 7 fixiert, wobei das Bodengerüst 7 in diesem Fall aus Formrohren aus Stahl gebildet ist, welche in einer Dreiecksform zueinander angeordnet sind, vgl. Fig. 13, die eine axonometrische Ansicht der Vorrichtung 100 aus Fig. 10 von schräg unten zeigt.

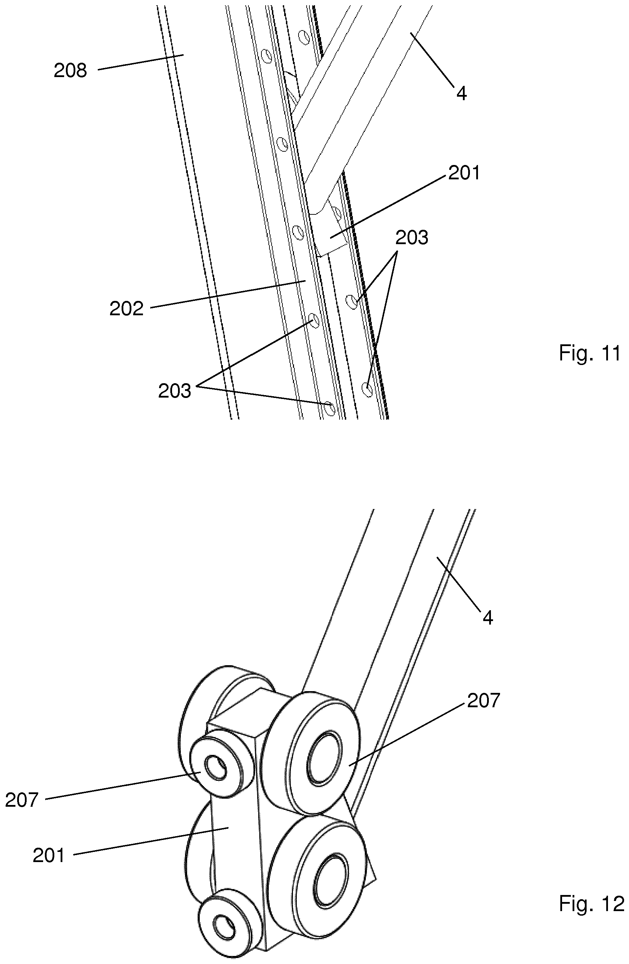

Um die Optik zu verbessern, sind die Führungsprofile 202 mit einem Gehäuse 208 aus Kunststoff verkleidet, welches an den Querschnitt der Führungsprofile 202 angepasst ist. Fig. 11 zeigt eine Detailansicht eines Führungsprofils 202 mit einem darin geführten Block 201, der am Ende einer Verbindungsstange des Gestänges 4 angeordnet ist. Die Form des Blocks 201 ist dabei an den Querschnitt des Hohlprofils 214 des Führungsprofils 202 angepasst. Der Block 201 kann sich im Führungsprofil 202 auf und ab bewegen. Wie in Fig. 11 erkennbar ist, weist das Führungsprofil 202 Löcher 203 auf, durch die ein Stift oder Bolzen (nicht dargestellt) geführt werden kann, um die Bewegung des Blocks 201, insbesondere nach unten hin, zu begrenzen. D.h. der Stift/Bolzen und die Löcher 203 bilden ein Blockiermittel, um die vertikale Bewegung der Ringkonstruktion 1 zu blockieren. Indem zwei Stifte/Bolzen in Löcher 203 direkt unter und über dem Block 201 gesteckt werden, kann die Position des Blocks 201 im Führungsprofil 202 - und damit die vertikale Position der Ringkonstruktion im Wesentlichen (bis auf ein gewisses Spiel) fixiert werden.

In Fig. 12 ist der Block 201 im Detail dargestellt. Der Block 201 weist kugelgelagerte Rollen 207 auf, um eine möglichst reibungsfreie Bewegung im Führungsprofil 202 zu ermöglichen. Die Abmessungen des Blocks 201 bzw. der Rollen 207 sind dabei so gewählt, dass jede Rolle 207 niemals gleichzeitig zwei gegenüberliegende Wände des Hohlprofils 214 des Führungsprofils 202 berührt, womit ein unbeabsichtigtes Blockieren der Auf-Ab-Bewegung ausgeschlossen ist.

In der Ansicht der Fig. 13 ist eine bevorzugte Anordnung der (Laser Gaming) Sensoren 19 in Form eines Sechsecks erkennbar, die sicherstellt, dass jede Fußbewegung der Person 25 in jeder Drehrichtung von mindestens einem Sensor 19 erkannt wird. Zudem ist eine Vibrationseinheit 219 erkennbar, die in der Mitte zwischen den Sensoren 19 an der Plattform 7a angeordnet ist und ein Rütteln der Plattform 7a ermöglicht. Auf diese Weise kann insbesondere ein Force Feedback für die Person 25 generiert werden.

Fig. 14 zeigt eine weitere Ausführungsvariante der Ringkonstruktion 1. Hierbei besteht der zweite ringförmige Teil 12 aus einem oberen Teil 210 und einem unteren Teil 211, wobei in einer bevorzugten Ausführungsform die beiden Teile 210, 211 identisch ausgebildet sind. Vorzugsweise bestehen die Teile 210, 211 aus Hartkunststoff. Die Teile 210, 211 weisen umfänglich verteilt Ausnehmungen 212 für die Aufnahme bzw. Lagerung von Umlenkrollen 200 auf. Diese Umlenkrollen 200 weisen an ihrem Umfang eine bestimmte Form auf, wie zum Beispiel eine U-Form oder eine V-Form. Der erste ringförmige Teil 13 weist an seinem äußeren Umfang eine zu den Umlenkrollen 200 korrespondierende Form auf. Die Umlenkrollen 200 werden mit dem ersten ringförmigen Teil 13 in einen der Teile 211, 210, vorzugsweise in den unteren Teil 211 eingesetzt, woraufhin der andere Teil 210, 211, vorzugsweise der obere Teil 210 aufgesetzt wird, wodurch der zweite ringförmige Teil 12 gebildet wird. Durch die Form der Umlenkrollen 200 wird einerseits eine axiale Bewegung des ersten ringförmigen Teils 13 gegenüber dem zweiten ringförmigen Teil 12 blockiert, andererseits wird die Rotation des ersten ringförmigen Teils 13 im zweiten ringförmigen Teil 13 ermöglicht.

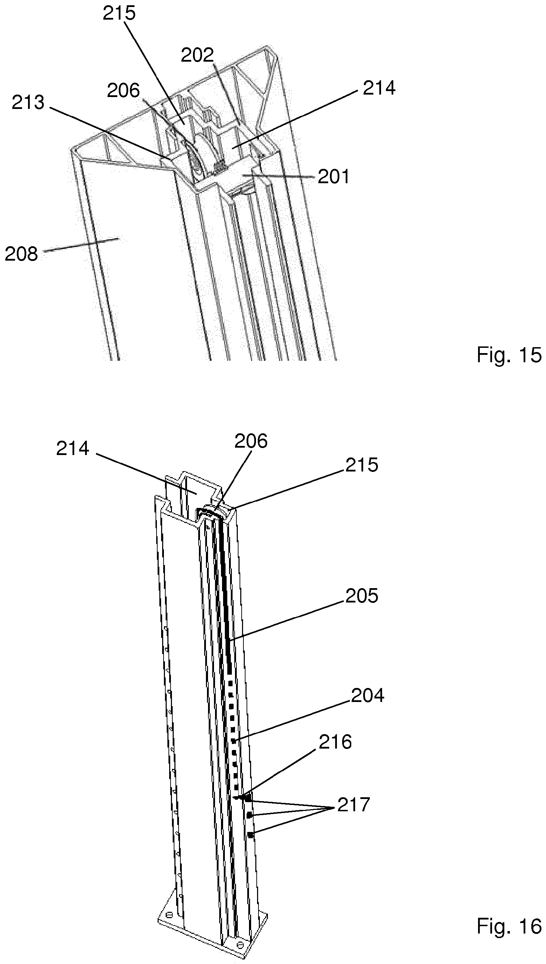

Fig. 15 zeigt eine Detailansicht des oberen Endes 213 eines Führungsprofils 202, wobei das obere Ende 213 frei ist und nicht vom Gehäuse 208 abgedeckt wird. Es ist erkennbar, dass im Führungsprofil 202 bzw. im Hohlprofil 214 ein Kanal 215 ausgebildet ist, in welchem eine Umlenkrolle 206 montiert ist. Diese Umlenkrolle 206 dient zur Umlenkung eines Seils 205, welches an einem Ende mit dem Block 201 verbunden ist und am anderen Ende mit einem Kompensationsmittel in Form eines Gegengewichts, eines Federelements oder eines Gummielements 204. Auf diese Weise kann die Gewichtskraft, die konstruktionsbedingt auf die Ringkonstruktion 1, insbesondere auf den ersten ringförmigen Teil 13 wirkt und damit auch den Benutzer 25 nach unten ziehen würde, kompensiert werden. Fig. 16 zeigt hierzu eine Ausführungsvariante, bei welcher als Kompensationsmittel ein Gummielement 204 (punktiert dargestellt) zum Einsatz kommt, das an einem Ende mit dem Seil 205 verbunden ist und am anderen Ende am Führungsprofil 202 befestigt ist. Zur Illustration ist der Kanal 215 in Fig. 16 transparent dargestellt, sodass das Gummielement 204 erkennbar ist. Dessen Befestigung am Führungsprofil 202 erfolgt mittels eines Befestigungselements 216, das an mehreren Befestigungspositionen 217 fixierbar ist. Dies ermöglicht die Vorspannung des Gummielements 204 einzustellen, sodass die auf die Ringkonstruktion 1 konstruktionsbedingt wirkende Gewichtskraft nur teilweise oder vollständig kompensiert oder überkompensiert wird. Entsprechend würde die Person 25 beim Benutzen der Vorrichtung 100 eine gewisse, leichte Kraft verspüren, die die Ringkonstruktion 1 (und damit die Person 25) nach unten zieht; oder die Person 25 würde keine in vertikaler Richtung wirkende Kraft spüren; oder die Person würde eine gewisse, leicht Kraft verspüren, die die Ringkonstruktion 1 (und damit die Person 25) nach oben drückt. Das Befestigungselement 216 kann beispielsweise als verschraubbares Element ausgeführt sein, und die Befestigungspositionen 217 können mit entsprechenden Gewinden versehen sein. Alternativ kann das Befestigungselement 216 als Haken ausgebildet sein, und die Befestigungspositionen 217 können mit entsprechenden Ösen bzw. Öffnungen, in denen die Haken verhakt werden können, ausgebildet sein.

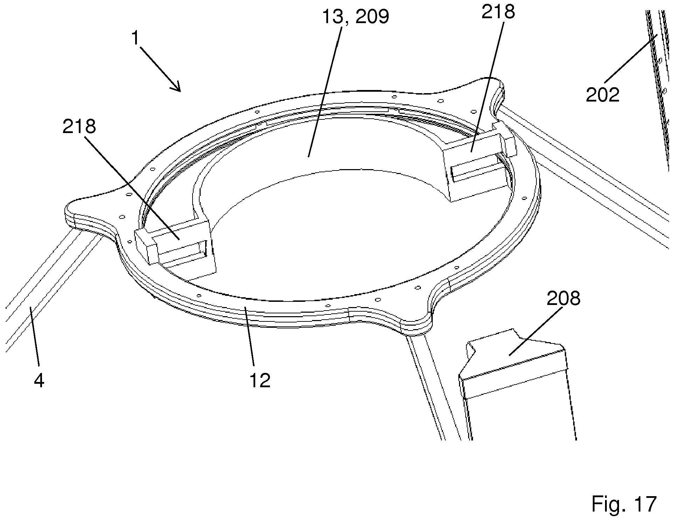

Fig. 17 zeigt eine weitere Ausführungsform der Ringkonstruktion 1, bei welcher der erste ringförmige Teil 13 selbst einen Hüftgurt für die Person 25 ausbildet. Hierbei umfasst der erste ringförmige Teil 13 einen starren, ersten Teil 209, der in der Ebene, die durch den ersten ringförmigen Teil 13 aufgespannt wird, im Wesentlichen eine U-Form aufweist, wobei von jedem Enden des U ein Arm 218 absteht. Die Arme 218 weisen ihrerseits ebenfalls eine U-Form auf, allerdings in einer ebene, die normal auf die Ebene, die durch den ersten ringförmigen Teil 13 aufgespannt wird, steht. Auf diese Weise kann jeder Arm 218 den zweiten ringförmigen Teil 12 aufnehmen, und der erste, starre Teil 209 kann relativ zum zweiten ringförmigen Teil 12 verdreht werden. Zusätzlich können hierzu Führungen am zweiten ringförmigen Teil 12 und an den Armen 218 vorgesehen sein - z.B. in Form einer Nut im zweiten ringförmigen Teil 12, in welche eine an den jeweiligen Arm 218 angeformte Nase eingreift (nicht dargestellt) -, um eine besonders präzise Führung des ersten, starren Teils 209 bei Drehungen zu ermöglichen. Gleichzeitig wird durch die Arme 218 eine axiale Bewegung des ersten, starren Teils 209 relativ zum zweiten ringförmigen Teil 12 blockiert. Am ersten, starren Teil 209 wird ein zweiter, flexibler Teil (nicht dargestellt) befestigt, der ein Anpassen und Festmachen des so gebildeten Hüftgurts an die/der Person 25 ermöglicht.

Die beschriebenen Vorrichtungen stellen lediglich einige von vielen möglichen Varianten der Erfindung dar. Die Erfindung ist keineswegs auf die beschriebenen Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung zu verlassen.

## Patentansprüche

1. Vorrichtung (100) zum Aufnehmen zumindest einer Person (25) und zur teilweisen Einschränkung der Bewegungsfreiheit der in der Vorrichtung (100) aufgenommenen Person (25), mit einer Plattform (7a) und einem oberhalb der Plattform (7a) angeordneten ersten ringförmigen Teil (13) zum Umschließen der zumindest einen Person (25), wobei der erste ringförmige Teil (13) indirekt mit der Plattform (7a) verbunden und relativ zur Plattform (7a) drehbar ist, wobei der erste ringförmige Teil (13) in Bezug zur Plattform (7a) auf- und ab bewegbar ist, wobei weiters die Vorrichtung (100) einen zweiten ringförmigen Teil (12) aufweist, wobei die durch den ersten ringförmigen Teil (13) aufgespannte Ebene und die durch den zweiten ringförmigen Teil (12) aufgespannte Ebene im Wesentlichen parallel zueinander stehen und der erste ringförmige Teil (13) innerhalb des zweiten ringförmigen Teils (12) angeordnet und an diesem um eine Drehachse (13a), die im Wesentlichen normal zu der vom ersten ringförmigen Teil (13) aufgespannten Ebene steht, drehbar gelagert ist, wobei weiterhin an dem zweiten ringförmigen Teil (12) an mindestens einem Punkt ein Gestänge (4) befestigt ist, das schräg zu der vom zweiten ringförmigen Teil (12) aufgespannten Ebene nach unten verläuft, **dadurch gekennzeichnet, dass** das Gestänge (4) an seinem äußeren Ende eine Führungsstruktur (5, 201) aufweist, die an einer länglichen senkrechten Führung (6, 202) geführt ist.

2. Vorrichtung nach einem der vorhergehenden Ansprüche, **dadurch gekennzeichnet, dass** die Vorrichtung (100) zumindest eine Sensoreinrichtung zur Detektion der Bewegung und/oder des Bewegungsablaufes und/oder des Bewegungsausmaßes der von der Vorrichtung (100) aufgenommenen Person (25) aufweist.

3. Vorrichtung nach einem der Ansprüche 1 bis 2, **dadurch gekennzeichnet, dass** am zweiten ringförmigen Teil (12) Umlenkrollen (200) angeordnet sind, wobei die Umlenkrollen (200) und der erste ringförmige Teil (13) derart zueinander ausgelegt sind, dass der erste ringförmige Teil (13) mittels der Umlenkrollen (200) gegenüber dem zweiten ringförmigen Teil (12) drehbar gelagert und gleichzeitig axial gehalten ist.

4. Vorrichtung nach einem der Ansprüche 1 bis 3, **dadurch gekennzeichnet, dass** zumindest ein Blockiermittel (203) vorgesehen ist, um eine Bewegung der Führungsstruktur (5, 201) in der länglichen Führung (6, 202) zu blockieren.

5. Vorrichtung nach Ansprüche 1 bis 4, **dadurch gekennzeichnet, dass** zumindest ein Kompensationsmittel vorgesehen ist, um die Gewichtskraft, die aufgrund der Konstruktion der Vorrichtung auf den ersten ringförmigen Teil (13) wirkt, zumindest teilweise zu kompensieren, wobei es sich bei dem zumindest einen Kompensationsmittel vorzugsweise um ein Gegengewicht, um ein Federelement oder um ein Gummielement (204) handelt.

6. Vorrichtung nach Anspruch 5, **dadurch gekennzeichnet, dass** das Gestänge (4) mittels eines Seils (205) mit dem mindestens einen Kompensationsmittel (204) wirkverbunden ist, wobei das Seil (205) über eine an der länglichen Führung (202) angeordneten Umlenkrolle (206) umgelenkt wird.

7. Vorrichtung nach einem der Ansprüche 1 bis 6, **dadurch gekennzeichnet, dass** die Plattform (7a) durch eine Stahlplatte und eine darüber liegende Kunststoffplatte (2), vorzugsweise aus PE-HMW oder PE-HD, gebildet ist, wobei vorzugsweise die Stahlplatte an einem Bodengerüst (7) angeschraubt ist und die Kunststoffplatte (2) mit der Stahlplatte verbunden, vorzugsweise an diese angeschraubt bzw. geklebt ist.

8. Vorrichtung nach einem der Ansprüche 1 bis 7, **dadurch gekennzeichnet, dass** die Plattform (7a) Löcher für den Durchtritt von Lichtstrahlen von optischen Sensoren aufweist.

9. Vorrichtung nach einem der vorhergehenden Ansprüche, **dadurch gekennzeichnet, dass** die Vorrichtung (100) ein Schuhwerk für die von der Vorrichtung (100) aufgenommene Person umfasst, welches im Zusammenspiel mit der Plattform (7a) einen Gleitreibungskoeffizienten µ_{G} aufweist, wobei µ_{G} ≤ 0,07 gilt, insbesondere 0,01 ≤ µ_{G} ≤ 0,02.

10. Vorrichtung nach einem der vorhergehenden Ansprüche, **dadurch gekennzeichnet, dass** die Vorrichtung (100) eine Vibrationseinheit (219) und/oder eine räumliche Bewegungsmaschine umfasst, wobei die Vibrationseinheit (219) und/oder die räumliche Bewegungsmaschine vorzugsweise an der Plattform (7a) angeordnet sind.

11. Vorrichtung nach einem der Ansprüche 2 bis 10, **dadurch gekennzeichnet, dass** die Sensoreinrichtung zumindest einen optischen Sensor (19) umfasst, der unter der Plattform (7a) angeordnet ist, wobei vorzugsweise der optische Sensor eine optisch funktionierende Computermaus ist, die mit ihrer Unterseite nach oben gerichtet ist.

12. Vorrichtung nach einem der Ansprüche 2 bis 11, **dadurch gekennzeichnet, dass** optische Sensoren (19) der Sensoreinrichtung derart, vorzugsweise in Form eines Sechseckes, angeordnet sind, dass jede Fußbewegung der Person (25) in jeder Drehrichtung von mindestens einem optischen Sensor (19) erkennbar ist, und dass vorzugsweise das Sensorsignal an einen Mikrocontroller (20) gesendet wird, besonders bevorzugt über einen USB-Hub (18) und einen USB-Host Shield.

13. Vorrichtung nach einem der Ansprüche 2 bis 12, **dadurch gekennzeichnet, dass** die Sensoreinrichtung, vorzugsweise optische oder akustische, Distanzsensoren (8, 9) umfasst, die im Bereich der Plattform (7a) angeordnet sind und dazu ausgebildet sind, die Höhe der ringförmigen Teile (12, 13) und/oder den Drehwinkel des ersten ringförmigen Teils (13) relativ zum zweiten ringförmigen Teil (12) zu messen.

14. Vorrichtung nach einem der Ansprüche 2 bis 13, **dadurch gekennzeichnet, dass** die Sensoreinrichtung, vorzugsweise optische oder akustische, Distanzsensoren (9) umfasst, die im Bereich der Führung (6, 202) angeordnet sind und dazu ausgebildet sind, die Höhe der ringförmigen Teile (12, 13) zu messen.

15. Vorrichtung nach einem der Ansprüche 2 bis 14, **dadurch gekennzeichnet, dass** die Sensoreinrichtung vorzugsweise optische Sensoren umfasst, die im Bereich des zweiten ringförmigen Teils (12) angeordnet sind und dazu ausgebildet sind, die Drehrichtung und den Drehwinkel des ersten ringförmigen Teils (13) zu messen.

16. Vorrichtung nach einem der Ansprüche 2 bis 15, **dadurch gekennzeichnet, dass** die Vorrichtung (100) zur Auswertung der Sensorsignale zumindest einen Mikrocontroller (20) umfasst, der mit der zumindest einen Sensoreinrichtung verbunden ist, und dass vorzugsweise die Vorrichtung (100) eine Datenverarbeitungseinrichtung, insbesondere einen Computer (22), umfasst, die mit dem Mikrocontroller (20) verbunden ist.

17. Vorrichtung nach einem der Ansprüche 1 bis 16, **dadurch gekennzeichnet, dass** die Vorrichtung (100) zumindest einen ringsegmentförmigen Teil (28) aufweist, wobei die durch den ersten ringförmigen Teil (13) aufgespannte Ebene und die durch den zumindest einen ringsegmentförmigen Teil (28) aufgespannte Ebene im Wesentlichen parallel zueinander stehen und der erste ringförmige Teil (13) an dem zumindest einem ringsegmentförmigen Teil (28) um eine Drehachse (13a), die im Wesentlichen normal zu der vom ersten ringförmigen Teil (13) aufgespannten Ebene steht, drehbar gelagert ist, und dass vorzugsweise der ringsegmentförmige Teil (28) relativ zur Plattform (7a) drehfest ist.

18. Vorrichtung nach Anspruch 17, **dadurch gekennzeichnet, dass** der erste ringförmige Teil (13) an zwei ringsegmentförmigen Teilen (28) gelagert ist, wobei die ringsegmentförmigen Teile (28) einander gegenüberliegen.

19. Vorrichtung nach einem der Ansprüche 17 bis 18, **dadurch gekennzeichnet, dass** der zumindest eine ringsegmentförmige Teil (28) einen U-förmigen Querschnitt aufweist und der erste ringförmige Teil (13) zumindest teilweise von der U-Form des ringsegmentförmigen Teils (28) umgeben ist.

20. Vorrichtung nach einem der Ansprüche 17 bis 19, **dadurch gekennzeichnet, dass** Lager, insbesondere Kugellager, zwischen dem ersten ringförmigen Teil (13) und dem zumindest einen ringsegmentförmigen Teil (28) eine gegenseitige Verschiebung in axialer Richtung und in radialer Richtung verhindern oder zumindest beschränken.

21. Vorrichtung nach einem der Ansprüche 1 bis 20, **dadurch gekennzeichnet, dass** der erste ringförmige Teil (13) einen ersten, starren Teil (209) und einen zweiten, flexiblen Teil umfasst, wobei der erste Teil (209) und der zweite Teil einen Hüftgurt für die Person (25) bilden.

## Claims

1. An apparatus (100) for accommodating at least one person (25) and for partially limiting the freedom of movement of the person (25) accommodated in the apparatus (100), comprising a platform (7a) and a first annular part (13) arranged above the platform (7a) for surrounding the at least one person (25), wherein the first annular part (13) is indirectly connected to the platform (7a) and is rotatable relative to the platform (7a), wherein the first annular part (13) can be moved up and down in relation to the platform (7a), wherein further the apparatus (100) comprises a second annular part (12), wherein the plane formed by the first annular part (13) and the plane formed by the second annular part (12) stand substantially parallel with respect to each other, and the first annular part (13) is arranged within the second annular part (12) and is rotatably mounted thereon about a rotational axis (13a) which stands substantially normal to the plane formed by the first annular part (13), wherein further a rod assembly (4) is fastened to the second annular part (12) at least at one point, which rod assembly extends downwardly in an inclined manner in relation to the plane formed by the second annular part (12), **characterized in that** the rod assembly (4) comprises a guide structure (5, 201) at its outer end, which guide structure is guided on an elongated vertical guide (6, 202).

2. An apparatus according to one of the preceding claims, **characterized in that** the apparatus (100) comprises at least one sensor device for the detection of the movement and/or the sequence of movement and/or the extent of movement of the person (25) accommodated by the apparatus (100).

3. An apparatus according to one of the claims 1 to 2, **characterized in that** deflection rollers (200) are arranged on the second annular part (12), wherein the deflection rollers (200) and the first annular part (13) are formed with respect to each other in such a way that the first annular part (13) is rotatably mounted by means of the deflection rollers (200) in relation to the second annular part (12) and is simultaneously axially retained.

4. An apparatus according to one of the claims 1 to 3, **characterized in that** at least one blocking means (203) is provided in order to block a movement of the guide structure (5, 201) in the elongated guide (6, 202).

5. An apparatus according to claims 1 to 4, **characterized in that** at least one compensation means is provided in order to compensate at least in part the weight which acts as a result of the construction of the apparatus on the first annular part (13), wherein the at least one compensation means preferably concerns a counterweight, a spring element or a rubber element (204).

6. An apparatus according to claim 5, **characterized in that** the rod assembly (4) is operatively connected by means of a cable (205) to the at least one compensation means (204), wherein the cable (205) is deflected via a deflection roller (206) arranged on the elongated guide (202).

7. An apparatus according to one of the claims 1 to 6, **characterized in that** the platform (7a) is formed by a steel plate and a plastic plate (2) which is situated above said steel plate and is preferably made of PE-HMW or PE-HD, wherein preferably the steel plate is screwed onto a base frame (7) and the plastic plate (2) is connected to the steel plate, preferably screwed or glued onto said steel plate.

8. An apparatus according to one of the claims 1 to 7, **characterized in that** the platform (7a) comprises holes for the passage of light beams of optical sensors.

9. An apparatus according to one of the preceding claims, **characterized in that** the apparatus (100) comprises a footgear for the person accommodated by the apparatus (100), which footgear, in interaction with the platform (7a), has a sliding friction coefficient µ_{G}, wherein µ_{G} ≤ 0.07 applies, especially 0.01 ≤ µ_{G} ≤ 0.02.

10. An apparatus according to one of the preceding claims, **characterized in that** the apparatus (100) comprises a vibration unit (219) and/or a spatial movement machine, wherein the vibration unit (219) and/or the spatial movement machine are preferably arranged on the platform (7a).

11. An apparatus according to one of the claims 2 to 10, **characterized in that** the sensor device comprises at least one optical sensor (19) which is arranged beneath the platform (7a), wherein preferably the optical sensor is an optically functioning computer mouse which is oriented upwardly with its bottom side.

12. An apparatus according to one of the claims 2 to 11, **characterized in that** optical sensors (19) of the sensor device are arranged in such a way, preferably in form of a hexagon, that each movement of the feet of the person (25) can be recognised in any rotational direction by at least one optical sensor (19), and that preferably the sensor signal is transmitted to a microcontroller (20), especially preferably via a USB hub (18) and a USB host shield.

13. An apparatus according to one of the claims 2 to 12, **characterized in that** the sensor device comprises distance sensors (8, 9), preferably optical or acoustical ones, which are arranged in the region of the platform (7a) and are formed to measure the height of the annular parts (12, 13) and/or the rotational angle of the first annular part (13) relative to the second annular part (12).

14. An apparatus according to one of the claims 2 to 13, **characterized in that** the sensor device comprises distance sensors (9), preferably optical or acoustical ones, which are arranged in the region of the guide (6, 202) and are formed to measure the height of the annular parts (12, 13).

15. An apparatus according to one of the claims 2 to 14, **characterized in that** the sensor device comprises preferably optical sensors which are arranged in the region of the second annular part (12) and are formed to measure the direction of rotation and the rotational angle of the first annular part (13).

16. An apparatus according to one of the claims 2 to 15, **characterized in that** the apparatus (100) for evaluating the sensor signals comprises at least one microcontroller (20) which is connected to the at least one sensor device, and that preferably the apparatus (100) comprises a data-processing device, especially a computer (22), which is connected to the microcontroller (20).

17. An apparatus according to one of the claims 1 to 16, **characterized in that** the apparatus (100) comprises at least one ring-segment-shaped part (28), wherein the plane formed by the first annular part (13) and the plane formed by the at least one ring-segment-shaped part (28) stand substantially parallel with respect to each other, and the first annular part (13) is rotatably mounted on the at least one ring-segment-shaped part (28) about a rotational axis (13a) which stands substantially normal to the plane formed by the first annular part (13), and that preferably the ring-segment-shaped part (28) is torque-proof relative to the platform (7a).

18. An apparatus according to claim 17, **characterized in that** the first annular part (13) is mounted on two ring-segment-shaped parts (28), wherein the ring-segment-shaped parts (28) are situated opposite of each other.

19. An apparatus according to one of the claims 17 to 18, **characterized in that** the at least one ring-segment-shaped part (28) has a U-shaped cross-section and the first annular part (13) is surrounded at least partly by the U-shape of the ring-segment-shaped part (28).

20. An apparatus according to one of the claims 17 to 19, **characterized in that** bearings, especially ball bearings, between the first annular part (13) and the at least one ring-segment-shaped part (28) prevent or at least limit a mutual displacement in the axial direction and in the radial direction.

21. An apparatus according to one of the claims 1 to 20, **characterized in that** the first annular part (13) comprises a first rigid part (209) and a second flexible part, wherein the first part (209) and the second part form a hip belt for the person (25).

## Revendications

1. Dispositif (100) destiné à recevoir au moins une personne (25) et à limiter partiellement la liberté de mouvement de la personne (25) reçue dans le dispositif (100), avec une plate-forme (7a) et une première partie annulaire (13) disposée au-dessus de la plate-forme (7a) pour entourer l'au moins une personne (25), la première partie annulaire (13) étant reliée indirectement à la plate-forme (7a) et capable de rotation par rapport à la plate-forme (7a), la première partie annulaire (13) pouvant bouger vers le haut et le bas par rapport à la plate-forme (7a), le dispositif (100) comportant en outre une deuxième partie annulaire (12), le plan défini par la première partie annulaire (13) et le plan défini par la deuxième partie annulaire (12) étant pour l'essentiel parallèles l'un à l'autre et la première partie annulaire (13) étant disposée à l'intérieur de la deuxième partie annulaire (12) et supportée avec possibilité de rotation sur celle-ci autour d'un axe de rotation (13a) sensiblement perpendiculaire au plan défini par la première partie annulaire (13), une tige (4) étant en outre fixée en au moins un point à la deuxième partie annulaire (12) et orientée à l'oblique par rapport au plan défini par la deuxième partie annulaire (12) et disposée en bas, **caractérisé en ce que** la tige (4) présente à son extrémité extérieure une structure de guidage (5, 201) qui est guidée sur un guide vertical allongé (6, 202).

2. Dispositif selon l'une des revendications précédentes, **caractérisé en ce que** le dispositif (100) comporte au moins une installation de capteurs pour la détection du mouvement et/ou de la séquence de mouvements et/ou de l'amplitude de mouvement de la personne (25) reçue dans le dispositif (100).

3. Dispositif selon l'une des revendications 1 à 2, **caractérisé en ce que** des galets de renvoi (200) sont disposés sur la deuxième partie annulaire (12), les galets de renvoi (200) et la première partie annulaire (13) étant conçus l'un par rapport à l'autre de telle manière que la première partie annulaire (13) soit supportée au moyen des galets de renvoi (200) avec possibilité de rotation par rapport à la deuxième partie annulaire (12) tout en étant retenue dans le sens axial.

4. Dispositif selon l'une des revendications 1 à 3, **caractérisé en ce qu'**au moins un moyen de blocage (203) est prévu pour empêcher un mouvement de la structure de guidage (5, 201) dans le guide allongé (6, 202).

5. Dispositif selon les revendications 1 à 4, **caractérisé en ce qu'**au moins un moyen de compensation est prévu pour compenser au moins partiellement la gravité qui s'exerce sur la première partie annulaire (13) du fait de la construction du dispositif, l'au moins un moyen de compensation étant de préférence un contrepoids, un élément de ressort ou un élément en caoutchouc (204).

6. Dispositif selon la revendication 5, **caractérisé en ce que** la tige (4) est en liaison active au moyen d'un câble (205) avec l'au moins un moyen de compensation (204), le câble (205) étant dévié par un galet de renvoi (206) disposé sur le guide allongé (202).

7. Dispositif selon l'une des revendications 1 à 6, **caractérisé en ce que** la plate-forme (7a) est formée par une plaque d'acier et une plaque de plastique (2) disposée pardessus, de préférence en PE-HMW ou en PE-HD, la plaque d'acier étant vissée à un bâti au sol (7) et la plaque de plastique (2) reliée à la plaque d'acier, de préférence par vissage ou par collage.

8. Dispositif selon l'une des revendications 1 à 7, **caractérisé en ce que** la plate-forme (7a) présente des trous pour le passage de faisceaux lumineux de capteurs optiques.

9. Dispositif selon l'une des revendications précédentes, **caractérisé en ce que** le dispositif (100) comprend un chaussage pour la personne reçue dans le dispositif (100), qui présente en interaction avec la plate-forme (7a) un coefficient de friction par glissement µG tel que µG ≤ 0,07, en particulier 0,01 ≤ µG ≤ 0,02.

10. Dispositif selon l'une des revendications précédentes, **caractérisé en ce que** le dispositif (100) comprend une unité vibratoire (219) et/ou un positionneur à trois dimensions, l'unité vibratoire (219) et/ou le positionneur à trois dimensions étant de préférence disposés sur la plate-forme (7a).

11. Dispositif selon l'une des revendications 2 à 10, **caractérisé en ce que** l'installation de capteurs comprend au moins un capteur optique (19) disposé sous la plate-forme (7a), lequel capteur optique est de préférence une souris d'ordinateur à fonctionnement optique dont la face inférieure est tournée vers le haut.

12. Dispositif selon l'une des revendications 2 à 11, **caractérisé en ce que** des capteurs optiques (19) de l'installation de capteurs sont de préférence disposés en forme d'hexagone, de telle sorte que chaque mouvement du pied de la personne (25) dans chaque sens de rotation puisse être détecté par au moins un capteur optique (19), et **en ce que** le signal des capteurs est de préférence envoyé à un microcontrôleur (20), en particulier via un concentrateur USB (18) ou une platine hôte USB.

13. Dispositif selon l'une des revendications 2 à 12, **caractérisé en ce que** l'installation de capteurs comprend de préférence des capteurs de distance optiques ou acoustiques (8, 9) disposés au niveau de la plate-forme (7a) et conçus pour mesurer la hauteur des parties annulaires (12, 13) et/ou l'angle de rotation de la première partie annulaire (13) par rapport à la deuxième partie annulaire (12).

14. Dispositif selon l'une des revendications 2 à 13, **caractérisé en ce que** l'installation de capteurs comprend de préférence des capteurs de distance optiques ou acoustiques (9) disposés au niveau du guide (6, 202) et conçus pour mesurer la hauteur des parties annulaires (12, 13).

15. Dispositif selon l'une des revendications 2 à 14, **caractérisé en ce que** l'installation de capteurs comprend de préférence des capteurs optiques disposés au niveau de la deuxième partie annulaire (12) et conçus pour mesurer le sens de rotation et l'angle de rotation de la première partie annulaire (13).

16. Dispositif selon l'une des revendications 2 à 15, **caractérisé en ce que** le dispositif (100) comprend, pour l'analyse des signaux des capteurs, au moins un microcontrôleur (20) connecté à l'au moins une installation de capteurs et **en ce que** le dispositif (100) comprend de préférence une installation de traitement de données, de préférence un ordinateur (22), qui est connectée au microcontrôleur (20).

17. Dispositif selon l'une des revendications 1 à 16, **caractérisé en ce que** le dispositif (100) comprend au moins une partie en forme de segment d'anneau (28), le plan défini par la première partie annulaire (13) et le plan défini par l'au moins une partie en forme de segment d'anneau (28) étant pour l'essentiel parallèles l'un à l'autre et la première partie annulaire (13) étant supportée avec possibilité de rotation sur l'au moins une partie en forme de segment d'anneau (28) autour d'un axe de rotation (13a) sensiblement perpendiculaire au plan défini par la première partie annulaire (13), et **en ce que** la partie en forme de segment d'anneau (28) est de préférence fixe en rotation par rapport à la plate-forme (7a).

18. Dispositif selon la revendication 17, **caractérisé en ce que** la première partie annulaire (13) est supportée sur deux parties en forme de segment d'anneau (28), les parties en forme de segment d'anneau (28) se faisant face l'une à l'autre.

19. Dispositif selon l'une des revendications 17 à 18, **caractérisé en ce que** l'au moins une partie en forme de segment d'anneau (28) présente une section en forme de U et la première partie annulaire (13) est au moins partiellement entourée par la forme de U de la partie en forme de segment d'anneau (28).

20. Dispositif selon l'une des revendications 17 à 19, **caractérisé en ce que** des paliers, en particulier des roulements à billes, placés entre la première partie annulaire (13) et l'au moins une partie en forme de segment d'anneau (28) empêchent ou, du moins, limitent leur décalage réciproque dans le sens axial ou dans le sens radial.

21. Dispositif selon l'une des revendications 1 à 20, **caractérisé en ce que** la première partie annulaire (13) comprend une première partie rigide (209) et une deuxième partie flexible, la première partie (209) et la deuxième partie formant une ceinture pour la personne (25).
